# EUROPEAN PATENT APPLICATION

(11) **EP 2 529 690 A1**
(43) Date of publication of application: **05.12.2012**
(21) Application number: 11168203.5
(22) Date of filing: 31.05.2011
(51) Int. Cl.: A61C 5/06, A61C 19/00, A61C 3/08

(54) **Dental applicator tip and applicator tool**

(71) Applicant: Denpen I/S, 2800 Lyngby (DK)
(72) Inventor: Madsen, Niels, 2800 Lyngby (DK)
(74) Representative: Nielsen, Henrik Sten

(57) **Abstract**

An applicator tip of a dental apparatus for applying a portion of a light curable dental filling material to a dental surface, which comprises a body that has an applicator outlet and a hollow interior channel which communicates with the applicator outlet and defines an inlet connector oppossite the applicator inlet. The inlet connector is connectable to a source of the light curable dental filling via a further connector of the source of the light curable dental filling material and establishes communication from the source of the ligth curable dental filling material into the hollow interior channel. The applicator outlet is adapted to apply the portion of the light curable dental filling material to the dental surface, The hollow interior channel comprises an inner wall covering extending from the inlet connector to the applicator outlet. The body further comprises an external modelling part for modelling the portion of the light curable dental filling material. The body is pervious to light passing through the body from a source of light for irradiating and curing the portion of the light curable dental filling material, and the covering is impervious to the light for shlelding a remainder of the light curable dental filling material, present within the covering from the light to prevent the curing of the remainder of the light curable dental filling An applicator tool for use with the applicator tip is also provided.

## Description

Dental fillings, also known as dental restorations, are nowadays commonly performed by the use of a light curable dental filling material, which filling material applied to a surface of a suitably prepared tooth, i.e. a tooth which has been cut or machined to remove any dental decay and to provide a sound foundation or surface for building up the shape of the tooth using the filling material. Filing material may also be applied for treating a fractured tooth, or for treating the cervix of the tooth if it is damaged by tooth brushing (usur) or for fixation of orthodontic materials like wires, brackets etc.

During the procedure of applying the light curable dental filling material, numerous steps are performed using deferent tools or instruments. To exemplify, the general procedure may initially include the step of applying an etchant primer and bonding agent, or alternatively the substeps of separate applications of etchant, primer, and bonding resin, to the surfaces of the prepared tooth to ensure a good bond between the light curable dental filling material and the tooth, whereafter one or more sequences of applying, modelling, and curing the light curable dental filling material follows, the number of repetitions of the sequence being chosen to ensure that all light curable dental filling material receives a sufficient amount of light to cure properly. During the sequence tools, which tools include a manually operated injector for dispensing and applying filling material held in capsules known as cavifils, a modelling tool, e.g. a hand-held probe, and a hand-held light, are commonly used.

In addition, for some procedures where light curable dental filing material is to be applied to a prepared surface of a prepared tooth, which prepared surface faces a neighboring tooth, a matrix band may be positioned around the prepared tooth to form a mould for ensuring the correct shape, contour, and size of the dental filling, The use of a matrix band ensures that only a minimal gap, which prevents food from accumulating therein, is formed between the prepared tooth and the neighboring tooth once the light curable dental filling material has cured.

A limitation with the above procedures is that they are time-consuming. During the sequence of application, modelling, and curing of the light curable dental filling material the dentist is required to repeatedly change tools which increases the time needed for effecting the dental filling. Also where the dentist is assisted by a dental assistant, who may for example position and hold the hand-held light, whereby the dentist is only required to change between two tools. i.e. injector and the modelling tool, the dentist and dental assistent spend a lot of time in the procedure of changing instruments,

A further limitation is that the use of separate tools may lead to a non-ideal dental filling being effected. Especially in procedures using matrix bands, as outlined above, the use of separate tools may result in that the mould, formed by the prepared tooth and the matrix band, is not filled property with the light curable dental filling material, which may result in a dental filling that is not sufficiently lightly packed, and/or may contain trapped air pockets. Such a non-ideal dental filling is especially harmful it results in a chink being formed between the filling and the tooth as it will cause decay, gingivitis, and/or other dental problems. Such a non-ideal dental filling may also result in a larger gap between the prepared tooth and the neighboring tooth, in which gap food debris may accumulate serving as nutrients for bacteria associated with dental caries and/or gingivitis. Further the gap causes discomfort to the patient due to food impaction. Further, also applying to the general procedure, the light curable dental filling may bond less securely to the prepared tooth as the modeling tool is removed from the filling material before the light curable dental filling material is cured.

Various tools and techniques for use in effecting dental fillings are known from amongst others EP1827295, US20030186195, WO2008071837, DE10250714, US5098292, US4666405, US5791898, EP2047819, US7074040, WO2008138545, US6305934, and US4673353, These tools and techniques may be useful for effecting dental filings, however, there still exists a need for further tools and techniques.

An object of the present invention is to render the procedure of effecting a dental filing more efficient.

A further object of the present invention is to the safety and quality of dental fillings.

At least one of the above objects, or at least one of numerous other objects will be evident from the below detailed description of preferred embodiments of the present invention, is, according to corresponding first and fourth aspects of the present invention, achieved by an applicator tip of a dental apparatus for applying a portion of a light curable dental filling material to a dental surface comprising:
a body having an applicator outlet and a hollow interior channel communicating with the applicator outlet and defining an inlet connector opposite the applicator inlet,
the inlet connector being connectable to a source of the light curable dental filling material via a further connector of the source of the light curable dental filling material and establishing communication from the source of the light curable dental filling material into the hollow channel
the applicator outlet being adapted to apply the portion of the light curable dental filling material to the dental surface,
the hollow interior channel comprising an inner wall covering extending from the inlet connector to the applicator outlet,
the body further comprising an external modelling part for modelling the portion of the light curable dental filling material,
the body being pervious to light passing through the body from a source of light for irradiating and curing the portion of the light curable dental filling material, and
the inner wall covering being to the light for shielding a remainder of the light curable dental filling material present within the covering from the light to prevent the curing of the remainder of the light curable dental filling material,
and
a method of: applying a portion of a light curable dental filling material to a dental surface, modelling the portion of the light curable dental filling material on the dental surface, and curing the portion of the light curable filling material on the dental surface, comprising the steps of:
(a) providing a body having an applicator outlet and a hollow interior channel communicating with the applicator outlet and defining an inlet connector opposite the applicator inlet,
   the inlet connector being connectable to a source of the light curable dental filling material via a further connector of the source and establishing communication from the source of the light curable dental filling material into the hollow interior channel,
   the applicator outlet being adapted to apply the portion of the light. curable dental filling material to the dental surface,
   the hollow interior channel comprising an inner wall covering extending from the inlet connector to the applicator outlet,
   the body further comprising an external modelling part for modelling the portion of the light curable dental filling material,
   the body being pervious to light passing through the body from a source of light for irradiating and curing the portion of the light curable dental filling material
   the inner wall covering being impervious to the light for shielding a remainder of the light curable dental filling material present within the covering from the light to prevent the curing of the remainder of the light curable dental filling material,
(b) providing the source of the light curable dental filling material,
(c) providing the source of light for irradiating and curing the light curable dental filling material,
(d) connecting the inlet connector to the source of light curable dental filling material via the further connector of the source of light curable dental filling material and establishing communication from the source of light curable dental filling material into the hollow interior channel,
(e) applying the portion of the light curable dental filling material to the surface using the applicator outlet,
(f) modeling the portion of the light curable filling material using the modelling part, and
(g) passing light through the body from the source of light for irradiating and curing the portion of the light curable dental filling material, respectively.

The applicator tip is used both for applying and modeling the portion of light curable dental filling material. Thus the procedure of effecting a dental filling is rendered more efficient. Further, as the body of the appiscator tip is pervious to the light it allows the applicator tip to be maintained in contact with the portion of light curable denfal filling material during curing, while the remainder of the light curable filling material present in the inner wall covering is protected from curing so that subsequent applications of portions of light curable dental filling material to the dental surface are possible, This increases the safety and quality of dental fillings The inner wall covering allows the applicator tip to be used for multiple applications of portions of light curable dental filling material to the dental surface. The applicator tip is preferably disposable so that it is to be disposed of after effecting the dental filling, although it is contemplated within the context of the present invention that the application tip may be cleaned and sterilized after use for use in effecting further dental fillings.

In the context of the present invention the term dental surface is to be understood as comprising a surface on a human or animal tooth, a surface on a human or animal bone associated with a human or animal tooth or teeth, e.g. a jaw bone, a surface on a dental prosthetic, e.g. a crown, implant, bridge, denture, etc.

The light curable dental material typically comprises an activator or hardener sensible to light and initiation curing of the light curable filling material upon irradiation by the light. Alternatively the main constituent of the filling material may be sensible to the light for initiating curing of the light curable dental filling material.

The body may include a rear body portion and a front body portion. The body is preferably cylindrical.

The applicator outlet is preferably circular, but may be elliptical, rectangular or polygonal depending on the surface to which light curable dental filling material is to be applied to and the desired shape of the portion of the light curable dental filling material

Further the applicator outlet may comprise several openings for applying the portion of light curable dental filling material over a larger part of the dental surface.

The hollow interior channel preferably has a uniform diameter along its length, but may also be tapering towards the applicator outlet depending on the size of the applicator tip.

In the context of the present invention, the term opposite is to be understood as also comprising positions in regard to a flow of light curable dental filling material, as exemplified by a position upstream being opposite to a position downstream. The source of light curable dental filling material is preferably a container or syringe, more preferably a single use disposable capsule, and most preferably a single use disposable capsule known as a cavity.

The further connector is preferably a short pipe attached to the source of light curable dental filling material.

The inner wall covering is preferably paint or a costing applied to the inner wall of the hollow interior but may also be a tube or pipe inserted into the hollow interior channel and retained within the hollow interior channel by friction force or adhesive between the tube and the inner wall of the hollow interior channel. Alternatively, the wall may be integrated in the inner wall by moulding the applicator tip and positioning particles or pigment on the part of the mould contacting the hollow Interior channel, whereby the particles or pigment are incorporated into the inner wall of the hollow interior channel

In one embodiment of the applicator tip according to the first aspect of the present invention the wall of the hollow interior channel comprises a mixing structure adapted to mix the light curable denial filling material.

This is advantageous as it ensures that the portion of light dental filing material which is to be applied to the dental surface has a hornogenous distribution of the various constituents of the light curable dental filling material throughout the portion of light curable dental filling material

In the context of the present invention the modelling is to be understood as also comprising the terms forming, shaping, compressing, condensing, and distributing.

In the context of the present the term pervious is to be understood as comprising the situation where the light after passing through the element referred to has sufficient intensity to initiate the curing of the light curable dental filling material, thus being dependent on the strength of the light prior to passing through the element referred to and the type of light curable dental filling material.

In the context of the present invention the term irradiating, as in irradiating and curing the portion of the light curable dental filling material, is to be understood as also comprising the situation where only a part of the portion of light curable dental filling is irradiated, wherein curing of the rest of the portion of the light curable denial material is initiated by reactants, products,: or thermal energy, formed within the irradiated part of the portion of light curable dental filing.

In the context of the present invention the term curing, as in irradiating and curing the portion of the light curable dental filling material, is to be understood as also comprising the term spot curing, which comprises the situation where only a part of the portion of light curable dental filling material is cured, wherein curing of the rest of the portion of the light curable dental filling material may be effected using further irradiation.

In the context of the present the term impervious to the light is to be understood as comprising the situation where the light after passing through the element referred to has insufficient intensity to the curing of the light curable dental filling material, thus being dependent on the strength of the Sight prior to passing through the element referred to and the type of light curable dental filling material.

In the preferred embodiment of the applicator tip according to the first aspect of the present invention the applicator tip further comprises:
a light inlet juxtaposed the inlet connector
a light outlet juxtaposed the applicator outlet, and
the body having a refractive index adapted to guide light from the light, to the light outlet substantially without emitting the tight from the body between the light inlet and the light outlet.

In the context of the present invention the "substantially without emitting the light from said body" is lobe understood as also applying to the situation where some light is in fact emitted from the body, the amount of light however being so small that the remaining light being guided to the light outlet is sufficient to irradiate and cure the light curable dental fining material.

The light inlet may be defined by the envelope surface of the body, or more preferably be defined by the envelope surface of the rear body portion.

The light outlet may be provided on the modeling part,

The refractory index is preferably larger than 1,2, more preferably above 1,4. Suitable materials, having suitable refractive indices, for the body include plastics such as acrylic glass; poly carbonate, poly(methylmethacrylate), polyethylene terephthalate, etc. Glass may also be used as the material for the body.

In one embodiment of the applicator tip according to the first aspect of the present invention the applicator outlet is provided on the modelling part

In some embodiments of the applicator tip according to the first aspect of the present invention the applicator outlet is surrounded by an annular applicator outlet guard covering, the applicator outlet guard covering being impervious or semi-impervious to the light for shielding a part of the remainder of the light curable dental fining material present within the applicator outlet from the light to prevent or reduce the curing of the part of the remainder of the light curable dental filling material in the applicator outlet.

This is advantageous as it further prevents or reduces any curing of the light curable dental filling material within the applicator tip which may prevent further applications of the light curable dental filling material to the dental surface.

The applicator outlet guard covering may be separate from the inner wall covering but is preferably an extension of the inner wall covering.

In embodiments of the applicator tip according to the first aspect of the present invention the inlet connector an interior thread adapted to cooperate with an exterior thread of the further connector.

This is advantageous as it ensures and firm connection of the inlet connector to the further connector.

In accordance with the preferred embodiment of the applicator tip according to the first aspect of the present invention the interior thread is a thread forming thread and the exterior thread is formed by the interior thread during the of the inlet connector to the further connector.

This is advantageous as it decreases the time needed for attaching the applicator tip to the further connector and/or allows the applicator tip to be connected to different further connectors of different capsules.

In the context of the present invention term thread is to be understood as also comprising the term thread cutting.

In alternative embodiments of the applicator tip according to the first aspect of the present invention the inlet connector has an inner diameter, the further connector has an outer diameter, and the outer diameter is larger than the inner diameter for allowing the applicator tip to be connected and retained to the by interference fit.

This is advantageous as it provides a very quick connection of the applicator tip to the further connector.

In some embodiments of the applicator tip according to the first aspect of the present invention the is tapering so that the diameter of the inlet connector decreases along its length in the direction towards the applicator outlet. This is advantageous as it allows the applicator tip to be connected to different further connectors having different diameters.

In further alternative embodiments of the applicator tip according to the first aspect of the present invention the convector comprises inner annular groove, the further connector comprises an annular rib, and the applicator tip is connectable to the further connector by snap fit engagement the rib and the annular groove. This is advantageous as it allows a fast connection of the inlet connector to the further connector.

In yet further alternafíve enibodii-tients of the applicator tip according to the first aspect of the present invention the inlet connector comprises barbs for engaging the further connector for connecting the tip to the further connector,

The barbs may be spear shaped, or may be annular.

This is advantageous as it provides a fast, single use only, connection of the applicator tip to the further connector.

In other embodiments of the applicator tip according to the first aspect of the present invention the inlet connector comprises a groove and the further connector comprises a pin, the groove and comprising the elements of bayonet coupling for connecting the applicator tip to the further connector.

This is advantageous as it provides a fast connection of the applicator tip to the further connector.

In other alternative embodiments of the tip according to the first aspect of the present the inlet connector comprises a chemical composition for retaining the applicator tip to the further connector.

The chemical composition may be an adhesive, which adhesive may further be heat or light activated.

This is advantageous as it provides a single use only connection of the applicator tip to the further connector.

In advantageous embodiments of the applicator tip according to the first aspect of the present invention the modelling part has a concave modelling surface for fixing and compacting the portion of the light curable dental filling material on the surface, the applicator outlet being provided on the surface.

This is advantageous as it the forming of a mould defined by the dental surface and the concave modefiing surface, into which mould the portion of light curable dental filling material may be applied and pressurized by the application of further light curable dental filling material into the thereby preventing voids in the portion of curable dental filing material and/or ensuring a better curing.

The modelling surface may have any shape such as circular, elliptical, triangular, square, polygonal etc.

Further in accordance with the preferred embodiment of the applicator tip according to the first aspect of the present invention the modeling part is flexible and This is advantageous as it the modelling surface to contour itself to the dental surface and/or the surfaces surrounding the dental surface to which the portion of light curable dental filing material is to be applied. This forms a mould into which the portion of light curable dental filling material can be applied. As the portion of light curable dental filling material is subsequently cured the shape of the cured portion of the light curable dental filling material more closely complements the surfaces surrounding the dental surface. This decreases the amount, of grinding and polishing needed to match the cured portion of the light dental material to the surface surrounding the dental surface and is especially advantageous where the dental surface is a surface on a tooth's cervix.

Further in accordance with the preferred embodiment of the applicator tip according to the first aspect of the present invention the modelling surface is smooth. This is advantageous as it ensures a smooth surface on the cured portion of light curable dental filling material, thus further decreasing the amount of grinding and polishing needed to match the cured portion of the light curable dental filling material to the surfaces surrounding the dental surface,

A further advantage of the modeling part being flexible and elastic is that it allows the shape of the part to be manipulated by the user of the applicator tip to better fit variously shaped dental surfaces, such as for example dental surfaces provided in deeper cavities of a tooth,

in some embodiments of the applicator tip according to the first aspect of the present invention the modelling surface is bounded by a modelling wall, the modelling surface and the modelling wall defining a modeling cavity, This is advantageous as it allows larger portions of light curable dental filling material to be applied and modeled on the dental surface.

In embodiments of the applicator tip the modeling surface is preferably perpendicular to the hollow interior channel. However, the modelling surface may also be angled relative to the hollow interior channel. This is advantageous as it affords further possibilities for positioning the applicator tip relative to the dental surface.

In some embodiments of the applicator tip according to the first aspect of the present invention the modelling part comprises a cone shaped modelling surface and/or a ball shaped modelling surface.

This is advantageous as it allows further possibilities for modelling the portion of light curable dental filling material applied to the dental surface.

It is further contemplated within the context of the present invention that a single application embodiment of the applicator tip according to the first aspect of the present invention, the single application embodiment lacking the inner wall covering, may be provided. The single application embodiment has a lower manufacturing cost.

According to corresponding second and fifth aspects of the present invention an applicator tool for applying a portion of a light curable dental filling material to a dental surface, modelling the portion of the light curable dental filling material on the dental surface, and curing the portion of the light curable dental filling material on the dental surface, comprising:
a tool part comprising a first housing part having a generally elongated and cylindrical shape, the first housing part including a handle part and a support structure joined to the handle part,
the first housing part including an electrical switch operable from outside the first part and a light source connected to the electrical switch, the electrical switch being operable for supplying electrical power from a source of electrical power to the light source for energizing the light source for emitting light from a first light emission surface part of the first housing part,
the support structure having a first end and an opposite second end, the first end being joined to the handle part and the second end defining a coupling for receiving a rear end of a capsule containing the light curable material, the capsule comprising a displaceable end wall at the rear end and a discharge connector apposite the rear end,
the first housing part further including a piston and a drive mechanism, the piston being extendable through the coupling and having a piston head for engaging the displaceable end wall of the capsule, and the drive mechanism being actuable from outside the first housing part to advance the piston for discharging the portion of the light curable dental filling material through the discharge connector, and
a light guide part comprising a second housing part defining a hollow and generally cylindrical shape having an overall length exceeding the overall distance between the first and second end of the support structure,
the second housing part comprising a third open end and an opposite fourth open end, the second housing part covering the support structure from the third end for defining an interior compartment between the fourth open end and the coupling, the interior compartment being adapted to enclose the capsule and align the discharge connector with the fourth open end,
the third open end comprising a light receiving surface for receiving light emitted from the first light emission surface part for guiding the light from the third open end to the fourth open end through the second housing part,
the fourth open end being adapted to interface with an applicator tip according to the preferred embodiment of the applicator tip according to the first aspect of the present invention by inserting the body of the applicator tip into the fourth open end and connecting the applicator tip to the discharge connector for applying the portion of the light curable dental filing material to the dental surface, and for modelling the portions of the light curable dental filling material on the dental surface, and,
the fourth open end further comprising a second light emission surface for transferring light from the second housing part to the light inlet of said body of the applicator tip for guiding the light through the body to the light outlet for irradiating and curing the portion of the light curable dental filling material on the dental surface,
and,
a method of applying a portion of a light curable dental filling material to a dental surface, modelling the portion of the light curable dental filling material on the dental surface, and curing the portion of the light curable, dental filling material on the dental surface, comprising the steps of:
(a) providing a tool part comprising a first housing part having a generally elongated and cylindrical shape, the first housing part including a handle part and a support structure joined to the handle part,
   the first housing part including an electrical switch operate from outside the first housing part and a light source connected to the electrical switch, the electrical switch being operable for supplying electrical power from a source of electrical power to the light source for energizing the light source for emitting light from a first light emission surface part of the first housing part,
   the support structure having a first end and an opposite second end, the first end being joined to the handle part and the second end defining a coupling for receiving a rear end of a capsule containing the light curable material, the capsule comprising a displaceable end wall at the rear end and a discharge connector opposite the rear end,
   the first housing part further including a piston and a drive mechanism, the piston being extendable through the coupling and having a piston head for engaging the displaceable end wall of the capsule, and the drive mechanism being actuable from outside the first housing part to advance the piston for discharging the portion of the tight curable dental filling material through the discharge connector, and
   a light guide part comprising a second housing part defining a hollow and generally cylindrical shape having an overall length exceeding the overall distance between the first and second end of the support
   the second housing part comprising a third open end and an opposite fourth open end, the second housing part covering the support structure from the third end for defining an interior compartment between the fourth open end and the coupling, the interior compartment being adapted to enclose the capsule and align the discharge connector with the fourth open end,
   the third open end comprising a light receiving surface for receiving light emitted from the first light emission surface part for guiding the light from the third open end to the fourth open end through the second housing part,
   the fourth open end being adapted to interface with an applicator tip according to the preferred embodiment of the applicator tip according to the first aspect of the present invention by inserting the body of the applicator tip into the fourth open end and connecting the applicator tip to the discharge connector for applying the portion of the light curable dental filing material to the dental surface, and for modelling the portion of the light curable dental filling material on the dental surface, and,
   the fourth open end further comprising a second light emission surface for transferring light from the second housing part to the light of the body of the applicator tip for guiding the light through the body to the light outlet for irradiating and curing the portion of the light curable dental filling material on the dental surface,
(b) providing the capsule containing the light curable material,
(c) providing the applicator tip,
(d) enclosing the capsule in the interior compartment and aligning the discharge connector with the fourth open end and receiving the rear end of the capsule in the receiver,
(e) interfacing the applicator tip with the fourth open end by inserting the body of the applicator tip into the fourth open end and the applicator tip to the discharge connector,
(f) actuating the drive mechanism from outside the first housing part to advance the piston for discharging the portion of the light curable dental filling material through the discharge connector,
(g) applying the portion of the light curable dental filling material to the dental surface using the applicator tip,
(h) modelling the portion of the light curable dental filling material on the dental surface using the applicator tip, and
(i) operating the electrical switch for supplying electrical power from the source of electrical power to the light source for energizing the light source for irradiating and curing the portion of the light curable dental filling material on the dental surface,
respectively, are provided.

The support structure is preferably elongated and generally tubular. The support structure may also be tapering having a first diameter at the first end and a second diameter at the second end, said first diameter being larger than said second diameter.

The electrical switch is preferably operable from outside the first housing part by being connected to a button provided on the first housing part, however, the electrical switch may alternatively be a reed switch operable by applying a magnetic field to the first housing part and thereby operating the electrical switch.

The source of electrical power is preferably contained within the first housing part but may also be connected to the first housing part either directly or via electrical leads,

The source of electrical power is preferably a rechargeable battery provided within the first housing part. When the source of electrical power is a rechargeable battery it is connected to terminals for receiving charging current for charging the battery. The charging terminals may comprise inductors for transforming variations in a magnetic field into current for charging the battery, in which case the terminals may be provided within the first housing part, alternatively the terminals are provided on the exterior surface of the first housing part for being directly connectable to a source of charging current.

The light source preferably comprises a plurality of light emitting diodes arranged along the envelope surface of the first housing part. The light source is preferably Provided in the handle part and being oriented to emit light along the support structure. The light preferably has a wavelength of 370 nm - 520 nm.

The intensity of the light is preferably at least 500 mW/cm2.

The light emission surface part. is preferably a part of the light source such as the casing or lens of a LED.

The capsule is preferably a 0,2 g cavifil, but may alternatively be a larger capsule. The discharge connector is preferably a pipe.

The guide part preferably has a refractory index which is larger than 1,2, more preferably above 1,4. Suitable materials, having suitable refractive indices, for the light guide part include plastics such as acrylic glass, poly carbonate, poly(methyl) methacrylate), polyethylene terephthalate etc. Glass may also be used as the material for the light guide part.

In the context of the present invention the term enclose is to be understood as also comprising the term retain,

The light receiving surface may comprise a cavity into which the light emission surface part of the first housing part is insertable.

The fourth open end is preferably dimensioned so that the body of applicator tip makes contact with the second light emission surface when the rear body portion of the applicator tip is inserted into the fourth open end.

In a preferred embodiment of the applicator tool according to the second aspect of the present invention the second housing part is slidably positionable in a position upon the support structure for covering the support structure from the third end and defining the interior compartment,
the first housing part comprising a first locking structure,
the second housing part comprising a second locking structure, and,
the first locking structure being engageable and lockable with the second locking structure for retaining the second housing part in the position.

This is advantageous as it provides a simple way of enclosing the capsule

The first locking structure and the second baking structure may be comprised by a snap-fit connection.

In an alternative embodiment of the applicator tool according to the second aspect of the present invention the second housing part is divided into a rear section and a front section,
the rear section being permanently attached to the first housing part and covering a portion of the overall distance between the first and second end of the support structure, the light receiving surface of the rear section being permanently attached to the first light emission surface part, the rear section comprising a first locking structure,
the front section being slidably positionable in a position upon the support structure for covering a remainder of the overall distance between the first and second end of the support the front section comprising a second locking structure, and
the first locking structure being engageable and lockable with the second locking structure for retaining the front section in the position.

This is advantageous as it reduces Fresnel loss as the light is received by the light receiving surface of the light guide part. Further it reduces the cost of the removable part of the light guide part, the front section, thus allowing the front section to be replaced at a lower cost if damaged.

In a further alternative embodiment of the applicator tool according to the second aspect of the present invention the second housing part comprises a radial aperture at or near the fourth open end, the radial aperture establishing communication from the into the interior compartment and being adapted to allow the capsule to be positioned in reception with the coupling by being radially moveable through the radial aperture into the interior compartment. This is advantageous as it allows a simple way of mounting a capsule in the applicator tool.

In advantageous embodiments of the applicator tool according to the second aspect of the present invention the first housing part further comprises an electrical switch operable from outside the first housing part and an electrical vibrator connected to the electrical switch,
the electrical vibrator being operatively connected to the piston,
the electrical switch being operable for supplying electrical power from the source of electrical power to the electrical vibrator for energizing the electrical vibrator for supplying vibratory motion to the piston, and
the piston being adapted to transfer the vibratory motion to the light curable dental filling material within the capsule for lowering the viscosity of the light curable dental filling material.

This is advantageous as it allows the of light curable dental filling material to more closely conform to the dental surface and/or allows the portion of light curable dental filling material to be more easily modelled.

The electrical vibrator is preferably a piezoelectric element, in which case the electrical switch may be comprised by, or comprise, an oscillator for providing oscillation to the electrical power supplied to the piezoelectric element.

In advantageous embodiments of the applicator tool according to the second aspect of the present invention the drive mechanism comprises a rack and a pawl,
the rack being mounted the piston,
the pawl being adapted to engage the rack for advancing the piston upon actuation of the drive mechanism.

This is advantageous as it provides a simple and inexpensive way of providing the drive mechanism.

In an alternative embodiment of the applicator tool according to the second aspect of the present invention drive mechanism comprises a spring and a release mechanism,
the spring being operatively connected between the piston and the first housing part for accumulating spring potential energy upon retraction of the piston,
the spring further being adapted to advance the piston by converting the spring potential energy to work,
the release mechanism being operatively connected between the piston and the first housing part for arresting the advancement of the piston, and
the release mechanism being adapted to release the piston upon actuation of the drive mechanism for allowing the spring to advance the piston.

This is advantageous as it provides a drive mechanism which do not require any significant effort during the application of the portion of the light curable dental filling material to the dental which application may require the full attention of the user of the applicator tool due to for the surface being small or hard to reach. Instead the work of accumulating potential spring energy in the spring may be performed prior to commencing the effecting of the dental filling.

The spring may be a metal spring such as a coil spring, or may alternatively comprise a resilient member.

The release mechanism preferably comprises a brake member, a spring, and a button, the brake member being connected to the button and being biased to engage the piston by the spring for arresting the advancement of the piston, and the button being actuable from outside the first housing part to disengage the brake member from the piston to allow advancement of the piston.

In alternative embodiments of the applicator tool according to the second aspect of the present invention the spring is substituted by a piston in a chamber filled with a gas for accumulating potential energy by compressing the gas upon retraction of the piston.

In alternative embodiments of the applicator tool according to the second aspect of the present invention the drive mechanism comprises an electrical motor operatively connected to the piston for advancing the piston, the motor being connected to a further electrical switch operable from outside the first housing part to supply electrical power from the source of power to the electrical for advancing the piston.

In some embodiments of the applicator tool according to the second aspect of the present invention the piston has a handle opposite the piston head, the handle being operable from outside the first housing part for retracting the piston.

This is advantageous as it allows for fast retraction of the piston once the capsule is spent and a new capsule is to be mounted in the applicator tool.

In advantageous embodiments of the applicator tool according to the second aspect of the present invention the light guide part and the light emission surface part have the same refractory index.

This is advantageous as it reduces loss as the light is received by the light receiving surface of the light guide part.

According to a third aspect of the present invention an applicator assembly comprising the combination of:
the applicator tip according to the preferred embodiment of the applicator tip according to the first aspect of the present invention, and,
the applicator tool according the second aspect of the present invention, is provided.

The applicator assembly provides for effecting a dental filling using only one assembly, thus rendering the effecting of dental flings more efficient.

According to a sixth aspect of the present a modelling tool comprising:
a handle part having an elongated shape and defining a working end, the working end carrying a modelling tip for modeling a portion of a light curable dental filling material applied to a dental surface, the modelling tip being pervious to light passing through the modelling tip from a source of light for irradiating and curing the portion of the light curable dental filling material, is provided.

A light concentrating structure, such as a lens, may be provided within the modelling tip.

In the context of the present invention, the term elongated is to be understood as the situation where the length of the element referred to is at least 1.5 times its width.

In one embodiment of the modelling tool according the sixth aspect of the present invention the handle part, the working end and the modelling tip are pervious to curing light passing through the modelling tip from the source of curing light for irradiating and curing the portion of said light curable dental filing material.

This is advantageous as it allows the modeling tool to be cheaply produced from a single material.

In one embodiment of the modelling tool according the sixth aspect of the present invention the modeling tool is made from or comprises autoclavable materials. This is advantageous as it allows the modelling tool to be reused by being autoclaved and sterilized.

In one embodiment of the modeling tool according the sixth aspect of the present invention the modelling tip made from or comprises a material being non-adherent to the light curable dental filling material. This is advantageous as it prevents the light curable dental filing from sticking to the modelling tip.

In the context of the present invention the term non-adherent means that the element referred to has a surface energy which is lower than the surface energy of the dental surface.

In one embodiment of the modelling tool according to the sixth aspect of the present invention the modeling tip is removeable from the working end. This is advantageous as it the modelling tool to be used with differently shaped modelling tips for modelling the portion of light curable dental filling material on different dental surfaces.

In one embodiment of the modelling tool according the sixth aspect of the present invention the modelling tool is made from or comprises a material having a hard surface. This is advantageous as it prevents the modelling tool from being scratched or thereby further preventing light curable dental filling material from sticking to the light curable dental filling material.

The modelling tool may be for single use, whereby it is preferably made from acrylic glass or other similar strong material that can stand the pressure applied by the dentist.

Further the modelling tool may be made from plastic or acrylig glass and covered by a steel lattice or mesh.

The modelling tool may alternatively be for multiple use, whereby the handle part and the working end are preferably made from steel while the modelling tip is preferably made from glass or other similar strong material that can stand the pressure applied by the dentist.

The working end may be integral with the handle, or may alternatively be mounted to the handle. The working end may be integral with the modeling tip, or alternatively the modelling tip may be mountable onto the working end. Thus for example the working end may be made from steel for carrying a modeling tip mountable onto the working end.

In some embodiments of the modelling tool according to the sixth aspect of the present invention the modelling tip comprises a modelling surface for modeling the portion of light curable dental filling The modelling surface may have any shape suitable for modelling the portion of light curable dental filling material, thus the modeling surface may be flat, concave, convex etc. Several identical or different modelling surfaces may be provided on the modelling tip.

The modelling tip may have any shape suitable for modeling the portion of light curable dental fusing material. In some embodiments of he modelling tool according to the sixth aspect of the present invention the modelling tip is therefore spherical, cylindrical, cubical, conical, frusto-conical, pyramidal, prismal, ellipsoidal etc. In particular the modelling tip may be spatula-shaped, i.e. be shaped as a broad flat blade, wherein the opposite sides of the blade defines two modeling surfaces.

In one embodiment of the modelling tool according to the sixth aspect of the present invention the modelling tool comprises a further working end carrying a further modelling tip. The working end is made from plastic and the further working end is made from steel.

In one embodiment of the modelling tool according to the sixth embodiment of the present invention the handle part further comprises:
an electrical switch operable from outside the handle part and a light source connected to the electrical switch, the electrical switch being operable for supplying electrical power from a source of electrical power to the light source for energizing the light source for emitting light from a light emission part, and
a light guide extending from said light emission part to said modelling tip for guiding said light from said light emission part said modelling tip for irradiating and curing the portion of the light curable dental filling material. This is advantageous in that it allows the portion of light curable dental filling material to be modelled and cured using a single tool.

In one embodiment of the method according to the fifth aspect of the present invention the step (h) is substituted by, preceded by, or followed by the substeps of:
(i.i) providing a modelling tool comprising a handle part having an elongated shape and defining a working end, the working end carrying a modelling tip for modelling a portion of a light curable dental filling material applied to a dental surface, the modelling tip being pervious to light passing through the modelling tip from a source of light for irradiating and curing the portion of the light curable dental filling material, and
(i.ii) modelling the portion of light curable dental filling material on the dental surface using the modelling tip.

This may be advantageous where the surface to which the light curable dental filling material is to be applied to is too small for the applicator tip.

In one embodiment of the method according to the fourth aspect of the present invention the step (f) is substituted by, preceded by, or followed by the substeps of:
(i.i) providing a modelling tool comprising a handle part having an elongated shape and defining a working end, the working end carrying a modelling tip for modelling a portion of a light curable dental filling material applied to a dental surface, the modelling tip being pervious to light passing through the modelling tip from a source of light for irradiating and curing the portion of the light curable dental filling material, and
(i.ii) modelling the portion of light curable dental filling material on the dental surface using the modelling tip.

This may be advantageous where the surface to which the light curable dental filling material is to be applied to is too small for the applicator tip.

The invention and its many advantages will be described in more detail below with reference to the accompanying schematic drawings, which for the purpose of illustration show some non-limiting embodiments, and in which
Fig. 1 shows, in exploded view, a first embodiment of an applicator tip according to the first aspect of the present invention, the applicator tip being shown together with a conventional capsule containing filling material and a conventional injector,
Fig. 2 shows, in a perspective and exploded view, the first embodiment of the applicator tip according to the first aspect of the present invention, the applicator tip being shown together with the tip of the discharge pipe of the capsule,
Fig. 3 shows, in side, section, and perspective view respectively, the first embodiment of the applicator tip according to the first aspect of the present invention,
Fig. 4 shows, in side, section, and perspective view respectively, a second embodiment of the applicator tip according to the first aspect of the present invention,
Fig. 5 shows, in perspective view, the first embodiment of the applicator tip according to the first aspect of the present invention attached to the capsule mounted in a first embodiment of the applicator tool according to a second aspect of the present invention,
Fig. 6 shows, in side and section view, the first embodiment of the applicator tip according to the first aspect of the present invention attached to the capsule mounted in the first embodiment of the applicator tool according to the second aspect of the present invention,
Fig. 7 shows, in side, section and exploded view, the assembly of the first embodiment of the applicator tip according to the first aspect of the present invention with the capsule to be mounted in the first embodiment of the applicator tool according to a second aspect of the present invention,
Fig. 8 shows, in section, perspective and partial view, the first embodiment of the applicator tip according to the first aspect of the present invention being attached to the capsule mounted in the first embodiment of the applicator tool according to the second aspect of the present invention,
Fig. 9 shows, in section, and partial view, the first embodiment of the applicator tip according to the first aspect of the present invention being attached to the capsule mounted in the first embodiment of the applicator tool according to the second aspect of the present invention,
Fig. 10 shows, in side and section view, a second embodiment of the applicator tool according to the second aspect of the present invention with the capsule and the first embodiment of the applicator tip according to the first aspect of the present invention,
Fig. 11 shows, in side and perspective view, a first embodiment of a modelling tool according to the sixth aspect of the present invention, and,
Fig. 12 shows, in perspective view, further embodiments of the applicator tip according to the first aspect of the present invention.

In the below description, one or more signs added to a reference numeral indicates that the element referred to has the same or similar function as the element designated the un-subscripted reference numeral however, differing in structure.

When further embodiments of the plumbing fixture are shown in the figures, the elements which are new, in relation to earlier shown embodiments, have new reference numerals, while elements previously shown are referenced as stated above. Elements which are identical in the different embodiments have been given the same reference numerals and no further explanations of these elements will be given.

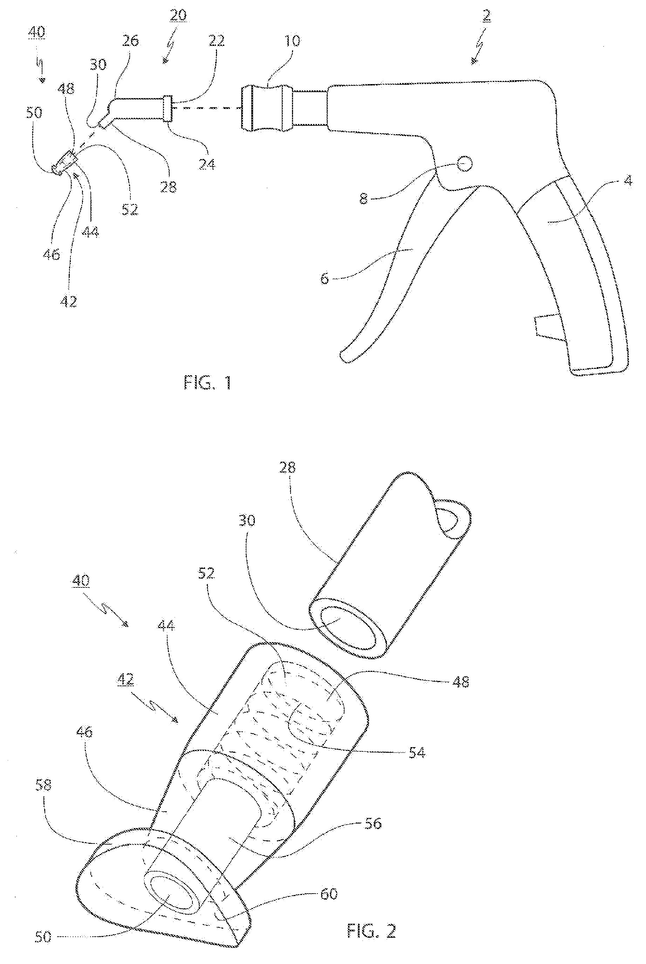

Fig. 1 shows, in exploded view, a conventional injector, in its entirety designated the reference numeral 2, having a handle, designated the reference numeral 4, and a lever, designated the reference numeral 6, pivotally fastened to the injector 2 via a pivot pin, designated the reference numeral 8. The conventional injector further comprises a conventional capsule interface, designated the reference numeral 10, for mounting a conventional capsule representing a source of a light dental filling material, in its entirety designated the reference numeral 20, of the type known as a cavifil, the capsule 20 having a rear end designated the reference numeral 22, a flange, designated the reference numeral 24, being provided at the rear end 22, and a front end, designated the reference numeral 26, and a discharge pipe, designated the reference numeral 28 and representing a further connector, being provided at the front end 26, including a discharge opening, designated the reference numeral 30. An end wall, designated the reference numeral 32, not shown in fig 1, is provided within the capsule 20, and is moveable towards the discharge pipe 28 upon movement of the lever 6 of the injector 2, when the capsule 20 is mounted to the injector 2. Displacement of the end wall 32 forces a light curable dental filling material, designated the reference numeral 34, not shown in fig. 1, to be discharged through the discharge pipe 28 and the discharge opening 30. The capsule 20 is made from plastic and typically contains 0.2 grams of light curable dental filling material and the injector 2 is made from plastic and metal.

Examples of the injector 2 include the "Cavifil injector" from the Swiss company Ivoclar Vivadent AG.

Fig. 1 and fig. 2 further show a first embodiment of an applicator tip, in its entirety designated the reference numeral 40, according to the first aspect of the present invention. The applicator tip 40 comprises a body, in its entirety designated the reference numeral 42, being constructed from an optically transparent material, the material being pervious to the light used to cure the light curable dental filling material 34. The body 42 includes a cylindrical rear body portion, designated the reference numeral 44, the envelope surface of the rear body portion 44 representing a light inlet, and a tapering front body portion, designated the reference numeral 46. A hollow interior channel, designated the reference numeral 48, extends through the body 42 from an applicator outlet, designated the reference numeral 50, in the front body portion 46, to the rear body portion 44, and defines an inlet connector, designated the reference numeral 52, for connecting the applicator tip 40 to the discharge pipe 28 of the capsule 20. The hollow interior channel 48 connects the inlet connector 52 with the applicator outlet 50 to allow a portion of the light curable dental filling material 34 to pass from the discharge opening 30 through the applicator tip 40 to be applied to a dental surface such as a prepared tooth to effect a dental restoration (not shown). The wall of the hollow interior channel 48 defining the inlet connector 52 is provided with a thread forming screw thread, designated the reference numeral 54, for allowing the applicator tip 40 to be securely attached to the discharge pipe 24. An inner wall covering, designated the reference numeral 56, covers the inner wall of the hollow interior channel 48. The inner wall covering is opaque and impervious to light from a curing lamp (not shown). The body 42 further comprises a modelling part, designated the reference numeral 58, being constructed from an optically transparent material and having a concave modelling surface, designated the reference numeral 60 and representing a light outlet, for forming, condensing, and compressing the portion of the light curable dental filling material 34 discharged through the opening 46.

The modelling part 58 is preferably made from a flexible and elastic material which allows the modelling surface 60 to contour itself to the dental surface and/or the surfaces surrounding the dental surface to which the portion of light curable dental filling material 34 is to be applied. Thus the portion of light curable dental filling material 34, after curing, more closely complements the surfaces surrounding the dental surface and the surface of the cured portion of light curable dental filling material 34 becomes smoother. Further the modelling part 58 may be manipulated by the user of the applicator tip 40 to better fit variously shaped dental surfaces.

In use the applicator tip 40 is attached to the capsule 20 by the engagement of the discharge pipe 28 by the thread forming screw thread 54 of the inlet connector 52. The capsule is then mounted in the capsule interface 10 of injector 2 according to the construction of the capsule interface 10. Alternatively the capsule 20 may be mounted in the injector 2 first, where after the applicator tip 40 is attached to the discharge pipe 28 as described above. The applicator tip 40 is then positioned adjacent a dental surface such as a surface of a prepared tooth to which a portion of the light curable dental filling material 34 should be applied, which portion of light curable dental filing material 34 is then delivered by moving the lever 6 of the injector. The portion of light curable dental filling material 34 which is applied may then be formed, condensed and/or compressed using the modelling part 58 and the modelling surface 60 of the applicator tip 40. Once the portion of light curable dental filling material 34 has been suitably the modelling surface 60 is used to apply pressure to the portion of light curable dental filling 34 while a light source emitting light (not shown) is positioned close to the applicator tip 40 for irradiating the portion of light curable dental filling material 34. As the body 42 and the modelling part 58 are constructed from an optically transparent material, the light may pass through the body 42 and the modeling part 58 to irradiate the portion of light curable dental filling material 34 to cause the portion of light curable dental filling material 34 to cure without necessitating the removal of the applicator tip 40. This results in that only two tools are required, i.e. the injector 2 with capsule 20 bearing the applicator tip 40, and the light source emitting light (not shown). Further, by not removing the applicator tip 40 during the curing of the portion of light curable dental filling material 34 it is ensured that the applied portion of the light curable dental filling material is properly condensed, does not contain any air bubbles, and properly conforms to the surface of the prepared tooth to which it is to be applied.

During curing of the portion of light curable dental filling material 34 the remainder of light curable dental filling material 34 which is present within the applicator tip 40 is protected from the light by virtue of the inner wall covering 56 which is opaque and impervious to light and thereby prevents light from irradiating and curing the remainder of light curable dental filling material 34. Further the filling material 34 which is present within the capsule 20 and the discharge pipe 28 is protected from the light, even when as shown in the figures the inner wall covering 56 only extends from the applicator outlet 50 to the inlet connector 52, as the capsule 20 and the discharge pipe 28 are conventionally made from an opaque plastic which impervious to the light. Alternatively the inner wall covering 56 may extend throughout the whole of the hollow interior channel 48 including the inlet connector 52 to further protect the remainder of the light curable dental filing material 34.

The optically transparent material is poly(methyl methacrylate) and the inner wall covering 56 is paint or a coating. Alternatively the inner wall covering 56 may comprise a rigid tube adhesively fastened within the hollow interior channel 48.

The modelling surface 60 may be diffused to give a high probability that light rays passing through the body 42 the modelling part 58 escapes through the modelling surface 60 to irradiate the portion of the light curable dental filling material 34.

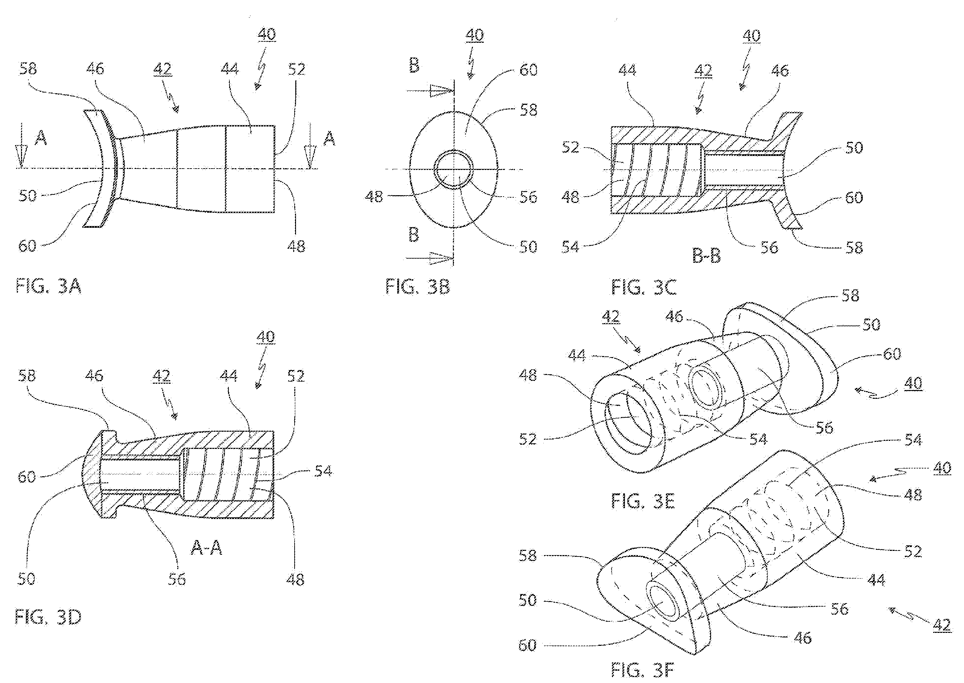

A prototype implementation of the applicator tip 40 shown in figs 1-3 has a length of 10 mm and a diameter around the rear body portion 44 of 4 mm. The diameter of the hollow interior channel 48 at the inlet connector 52 is 2 mm and the diameter of the applicator outlet is 1.5 mm. The modelling surface 60 has the dimensions 6x4 mm.

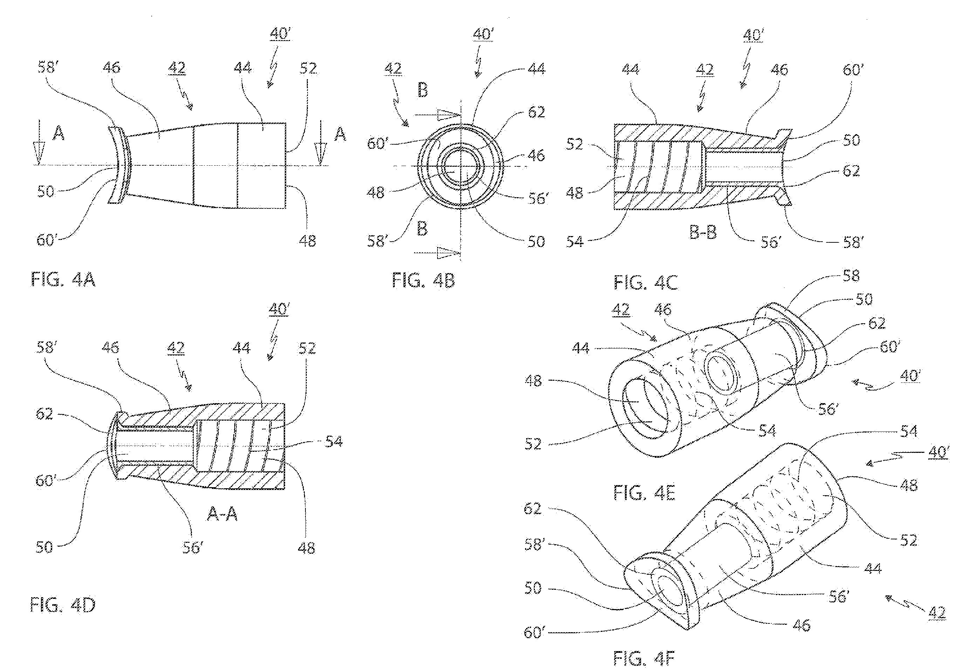

Fig. 4 shows in side, section, and perspective view respectively, a second embodiment of the applicator tip, designated the reference numeral 40', according to the first aspect of the present invention. The applicator tip 40' differs from the applicator tip 40 by having a smaller modelling part, designated the reference numeral 58' and a correspondingly smaller modeling surface, designated the reference numeral 60'. The applicator tip 40' further comprises an annular applicator outlet guard covering, designated the reference numeral 62, which is an extension of an alternative inner wall covering, designated the reference numeral 56', onto the modeling surface 60' to surround the applicator outlet 50 to further prevent curing of the remainder of the light curable dental filling material 34 present within the hollow interior channel 48 and/or the applicator outlet 50.

The applicator tip 40' is used for effecting dental restorations where the surfaces of the prepared tooth, to which the portion of light curable dental filling material is to be applied, are too small to allow the applicator tip 40 used.

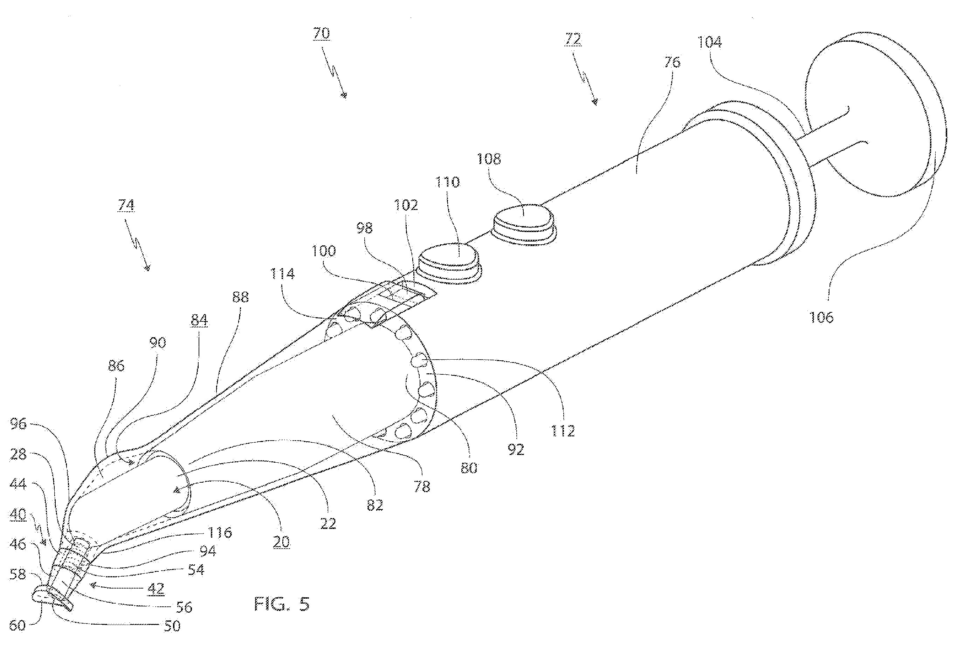

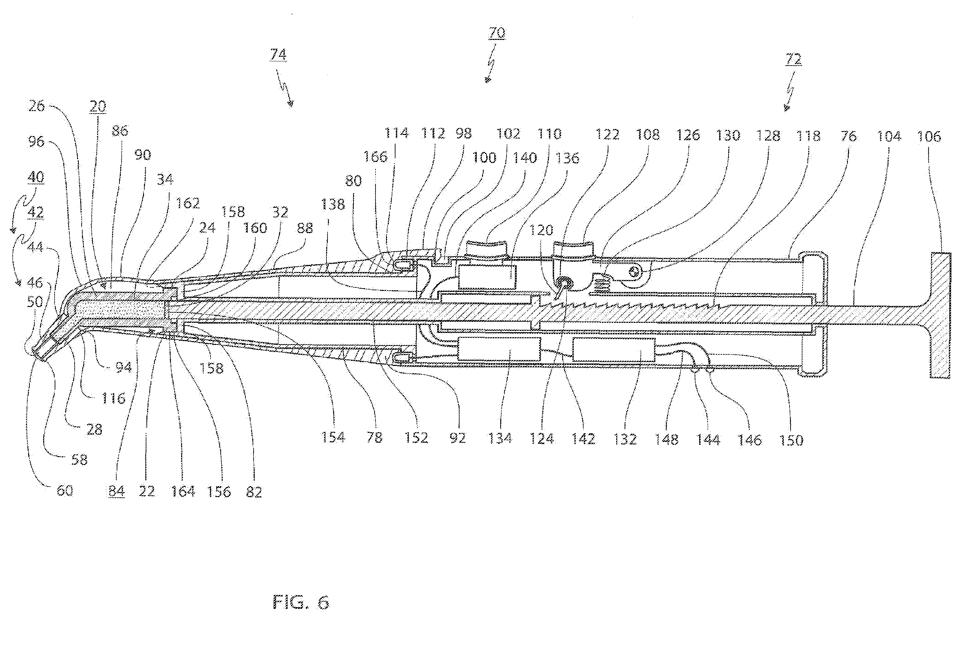

Figs. 5 and 6 show, in perspective and side section view respectively, the applicator tip 40 attached to the capsule 20 mounted in a first embodiment of an applicator tool, in its entirety designated the reference numeral 70, according to a second aspect of the present invention. The applicator tool 70 comprises a tool part constituting a first housing part, in its entirety designated the reference numeral 72, made from plastic, and a light guide part constituting a second housing part, in its entirety designated the reference numeral 74, made from polycarbonate plastic or poly(methyl methacrylate, connectable to the first housing part 72. The fist housing part 72 comprises a handle part, designated the reference numeral 76 and a tubular support structure, designated the reference numeral 78, having a first end, designated the reference numeral 80, joined to the handle part 76, and a second end, designated the reference numeral 82, comprising a coupling, in its entirety designated the reference numeral 84, for receiving the rear end 22 and the flange 24 of the capsule 20.

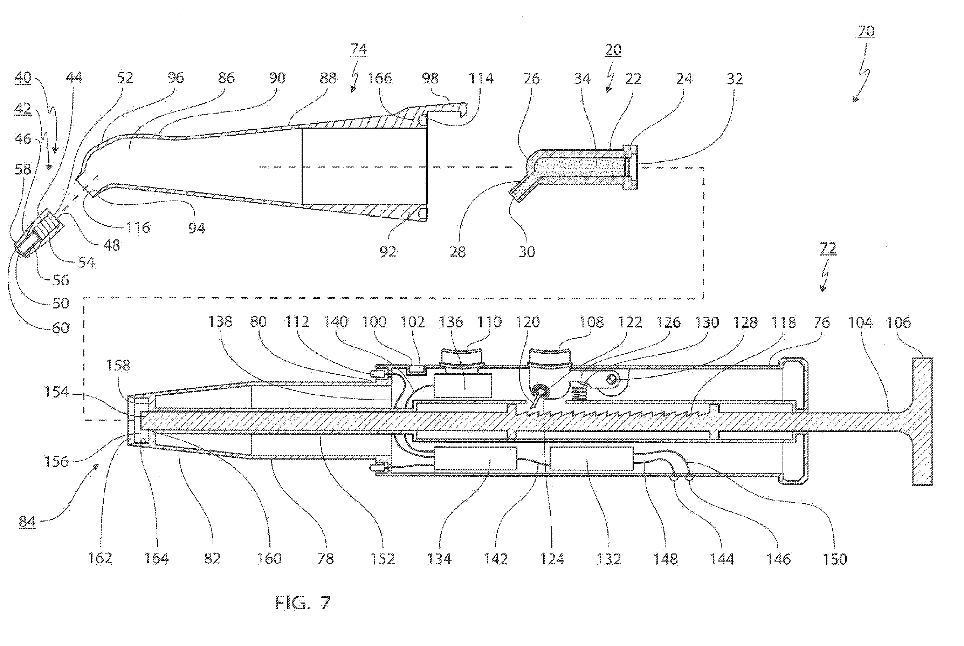

The second housing part 74 is hollow and made from an optically transparent material and can be connected to the first part 72 by slipping it over the support structure 78 to define an interior compartment, designated the reference numeral 86, bounded by the second housing part 74 and the coupling 84 for housing the capsule 20. The walls of the second housing part, designated the reference numeral 88, further form a bulge, designated the reference numeral 90, for accommodating the capsule 20 during the mounting of the capsule in the applicator tool 70, as will be described in further detail with reference to fig. 7 below. The second housing part 74 further comprises a third open end, designated the reference numeral 92, and a fourth open end, designated the reference numeral 94, through which fourth open end the discharge pipe 28 of the capsule 20 extends, and into which the first body portion 44 of the body 42 is inserted once the applicator tool 70 is properly assembled with capsule 20 and applicator tip 40. The capsule 40 is held in position by its contact with the coupling 84, the contact with the applicator tip 40 and the fourth open end 94, and the contact with a bow portion, designated the reference numeral 96, of the second housing part 74. The first housing part 72 and the second housing part are retained in connection by the interengagement of a catch, designated the reference numeral 98, provided on the second housing part 74, and a designated the reference numeral 100, of a recess, designated the reference numeral 102, on the first housing part 72.

The applicator tool 70 further comprises a metal piston, designated the reference numeral 104, extending through the applicator tool 70 to engage the end wall 32 of the capsule 20 (not shown in fig. 5). A handle, designated the reference numeral 106 is provided on the piston 104 for allowing the piston 104 to be manipulated, for example for manually retracting the piston 104 when the capsule 20 is to be dismounted from the applicator tool 70.

During use of the applicator tool 70 the piston 104 is advanced for applying a portion of light curable dental filling material 34 by pressing a button, designated the reference numeral 108, provided on the handle part 76 and representing a component of a drive mechanism. The detailed working of button 108 will be described below with reference to fig. 6, A further button, designated the reference numeral 110, is operatively connected to selectively energize a light source comprising a plurality of light emitting diodes (LEDs), one of which is designated the reference numeral 112, which LEDs emit light of a intensity and wave length suitable for curing the light curable dental filing material 34. The LEDs 112 are provided along the circumference of the handle part 76 where the first end 80 of the support structure 78 is joined to the handle part and are positioned and directed to emit light the support structure 78 towards the second end 82 of the support structure 78. The emitted light is captured by a light receiving surface, designated the reference numeral 114, of the third open end 92 of the second housing part 74 and led through the wall 88 of the second housing part 74 to the fourth open end 94, which fourth open end 94 comprises a second light emission surface, designated the reference numeral 116, wherefrom the light is transferred to the rear body portion 44 of the applicator tip 40 to emerge from the modelling surface 60 to cause curing of a portion of light curable dental filling material 34.

In fig. 5 the outer surface of the second housing part 74 is shown transparent for the sake of clarity, however, to prevent any stray light from being emitted from the outer surface of the second housing part 74 the outer surface of the second housing part 74 should be rendered opaque by painting the outer surface of the second housing part 74 with an opaque paint, or by coating the outer surface of the second housing part 74 with an opaque material such as rubber.

As shown in fig. 6 the piston 104 is advanced by virtue of being provided with a rack, designate the reference numeral 118, which, by applying pressure on the button 108, is engaged by a metal pawl, designated the reference numeral 120, fastened to the button 108 via a resilient bead, designated the reference numeral 122, made of rubber, which biases the pawl 120 to be held in a normal rotational position, as shown in fig. 6. The resilient bead 122 is connected to the button 108 by being positioned in a cavity, designated the reference numeral 124.

The button 108 is mounted on a lever, designated the reference numeral 126, which is pivotable around a pivot point, designated the reference numeral 128, and is biased to be positioned in a normal position, i.e. the position shown in fig. 6, by a helical spring 130. The rack 118, the pawl 120, the resilient bead 122, the cavity 124, the lever, 126, the pivot point 128 and the helical spring 130 represent components of a drive mechanism. To advance the piston 104 the button 108 is pressed into the handle part 76, causing the pawl 120 to engage the rack 118. Further movement of the button 108 into the handle part 78 causes the pawl 120 to advance the piston 118 while rotating slightly in its attachment in the resilient bead 122. On releasing the button 108 the helical spring 130 biases the button 108 to return to the normal position, while the resiliency of the resilient bead 122 causes the pawl to return to its normal rotational position, thereby positioning the pawl for renewed engagement with the rack 118 once button 108 is pressed again. Frictional forces between the piston 104 and the first housing part 72 and the support structure 78 ensure that the piston 104, once the pawl 120 disengages the rack 118, remains stationary. The mechanism of the rack 118 and the pawl 120 further allows the piston 104 to be retracted simply by pulling on the handle 106. The handle 106 may also be used to prime the piston 104, i.e. to position the piston 104 so that it is operatively positioned with respect to the end wall of the capsule 20.

The first housing part further comprises a rechargeable lithium ion battery, designated the reference numeral 132 and representing a source of electrical power, for supplying the LEDs 112 with electrical power via a LED driver circuit, designated the reference numeral 134, which LED driver circuit 132 comprises current limiting circuitry for driving, the LEDs 112 with a specified current, and a timer circuit for energizing the LEDs 112 for a specified time for ensuring a complete cure of the portion of light curable dental filling material 34 which is to be cured. The timer circuit may be preprogrammed with a standard time, but may also be re-programmed dependent on the curing characteristics of the light durable dental filling material 34 in the capsule 20. The LED driver circuit 134 is actuated by an electrical switch, designated the reference numeral 136, which is connected to the button 110. Electrical leads, designated the reference numerals 138, 140, and 142, respectively, connect the battery 132, the LED driver circuit 134 and the electrical switch 136.

The battery 132 is charged by connecting a source of electrical energy to first and second terminals, designated the reference numerals 144 and 146, respectively, connected to the battery 132 by electrical leads, designated the reference numerals 148 and 150, respectively.

The support structure 78 further comprises a guide channel, designated the reference numeral 152, for guiding the piston 104 and operatively positioning the piston head, designated the reference numeral 154, with respect to the rear wall 32 of the capsule 20. The coupling 84 comprises a coupling cavity, designated the reference numeral 156, for receiving the rear end 22 of the capsule 20, the coupling cavity 156 comprising a bottom wall, designated the reference numeral 158, comprising an aperture, designated the reference numeral 160, through which the piston 104 is projectable. The coupling cavity 156 further comprises an inclined annular guide surface, designated the reference numeral 162, and an annular sidewall, designated the reference numeral 164, the annular guide surface serving to guide the flange 24 of the capsule 20 into the coupling cavity 156 during assembly of the applicator tool 70, as will be described in more detail below with reference to fig. 7.

The light receiving surface 114 of the second housing part 74 is further provided with a plurality of LED interface cavities, one of which is designate the reference numeral 186, which LED interface cavities 166 are provided around the third open end 92 and into which the LEDs 112 project when the second housing part 74 is attached to the first housing part 72. The LED interface cavities 166 serve to ensure an effective transmission of light from the LEDs 112 into the optically transparent plastic material of wall 88 of the second housing part 74.

Fig. 7 shows, in side, section and exploded view, the assembly of the applicator tip 40 with capsule 20 and the mounting of capsule 20 in the applicator tool 70. The capsule 20 is mounted in the second housing part 74 by holding the second housing part with the fourth open end 94 pointing downwards whereafter the capsule 20 is dropped with the discharge pipe 28 first into the second housing part 74 so that the capsule 20 comes to rest with the discharge pipe 28 extending through the fourth open end 94. The second housing part 74 is then slid onto the support structure 78, whereby the guide surface 162 guides the flange 24 into the coupling cavity 156 for positioning the end wall 32 of the capsule 20 adjacent the piston head 154, the LEDs 112 enter the LED interface cavities 164, and finally the catch 98 engages the sidewall 100 of the recess 102 to retain the second housing part 74 to the first housing part 72. The applicator tip 40 is then threaded onto the discharge pipe 28 causing the rear body portion 44 of the body 42 to be inserted into the fourth open end 94, thereby fixating the capsule 20 between the bow portion 96 and the coupling 84.

To remove the capsule 20, the applicator tip 40 is unscrewed from the discharge pipe 28 where after the applicator tool 70 is disassembled by lifting the catch 98 out of the recess 102 and separating the second housing part 74 from the first housing part 72.

The led interface cavities 166 may be filled with an optical transparent liquid or gel prior to the of the first and second housing parts 72 and 74 of the applicator tool 70, in order to decrease loss of light due to Fresnel loss in the interface.

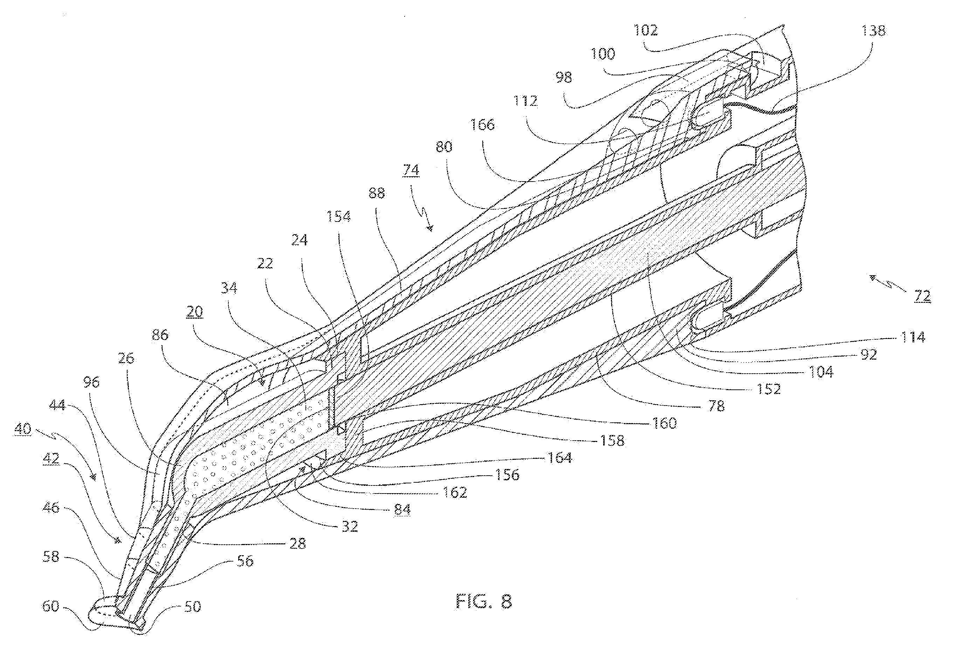

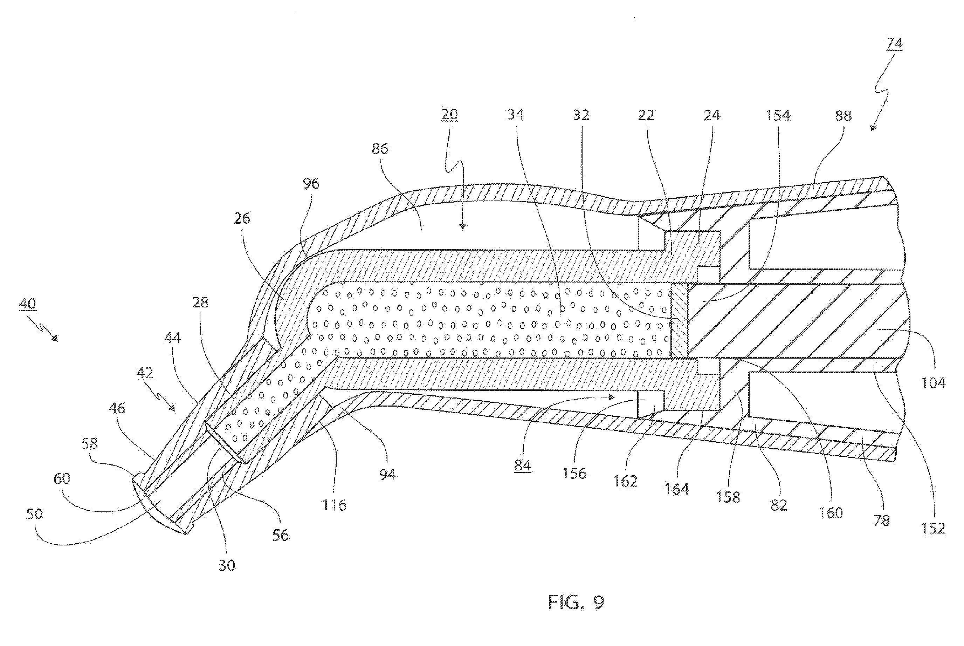

Fig. 8 and 9 show, in enlarged section, perspective and partial view, the applicator tip 40 attached to the capsule 20 mounted in the applicator tool 70. During curing of a portion of light curable dental filling material 34, applied to a dental surface, such as a prepared tooth, through the applicator outlet 50 the light from the LEDs 112 is captured by the LED interface cavities 166 in the light receving surface 114 of the second housing part 74 and is guided through the wall 88 of the second housing part 74 towards the applicator tip 40 via the bulge 90, the bow portion 96, and the second light emission surface 116 of the fourth open end 94 wherefrom the light is transferred tangentially into the rear body portion 44 of the applicator tip 40. Light entering the rear body portion 44 and the body 42 of the applicator tip 40 is further guided through the optically transparent material of the body 42 and the modelling part 58 to emerge through the modeling surface 60 to irradiate the portion of light curable dental filing material 34 applied to the prepared tooth. Any remainder of light curable dental filling material 34 present in the hollow interior channel 48 is shielded from the light by the opaque material of the inner wall covering 56.

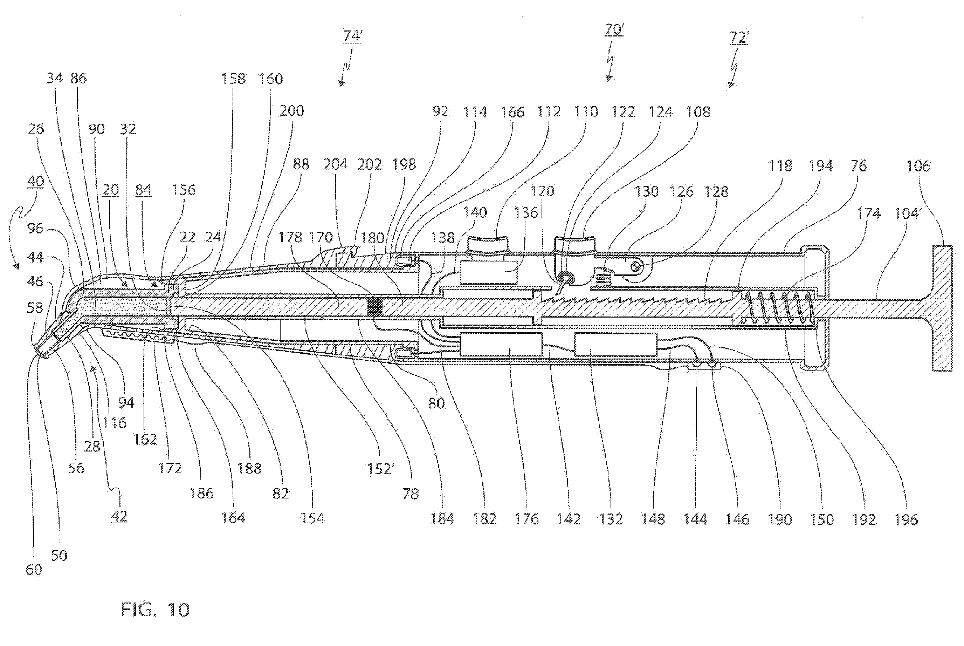

Fig. 10 shows, in side and section view, a second embodiment of the applicator tool, designated the reference numeral 70 according to the second aspect of the present invention, with the capsule 20 and the first embodiment 40 of the applicator tip according to the first aspect of the present invention. The applicator tool 70' differs from the applicator tool 60 by further comprising a piezoelectric element, designated the reference numeral 170 and representing an electrical vibrator, an electrical heating element, designated the reference numeral 172, a preload spring, designated the reference numeral 174, and by substituting the second housing part 74 for an alternative second housing part 74', and by substituting the LED driver circuit 134 with a microprocessor, designated the reference numeral 176.

To accommodate the piezoelectric element an alternative piston, designated the reference numeral 104', has been divided into a front and a rear segment, designated the reference numerals 178 and 180 respectively, the front and rear segments 178 and 180 being joined by the piezoelectric element 170 by means of adhesive. Thus energizing of the piezoelectric element 170 causes vibrational displacement of the front segment 178 relative to the rear segment 180. The vibrations imparted to the front segment 178 are then transferred from the piston head 154 to the rear wall 32 of the capsule 20 whereafter the vibrations are transferred to the light curable dental filling material 34 for decreasing the viscosity of the light curable dental filling material 34 for simplifying the application of the light curable dental filling material 34 to a dental surface such as a prepared tooth. The piezoelectric element 170 is energized by a drive signal transferred trough electrical leads, designated the reference numeral 182, and generated by the microprocessor 176 under control of the electrical switch 136. The microprocessor 176 is programmed to switch on and off the drive signal to the piezoelectric element 170 in response to a short activation of the electrical switch 136, whereas a long activation of the switch 136 causes the microprocessor to energize the LEDs 112, possibly using a timer circuit, as described above with reference to fig. 6. A cut-out, designated the reference numeral 184, is also provided in the guide channel 152 to allow the electrical leads 182 access to the piezoelectric element 170.

The electrical heating element 172 has a half cylindrical shape, allowing it to snap onto the second housing part 74 to surround the lower half of the second housing part 74 to heat the capsule 20 within the second housing part 74. The electrical heating element 172 is made from plastic and comprises a resistive heating coil, designated the reference numeral 186, embedded in the plastic material of the electrical heating element 172 for generating heat when energized by electrical current supplied through electrical leads, designated the reference numeral 188, running along the underside of the applicator tool 70' and terminating in a connector, designated the reference numeral 190, connectable to the first and second terminals 144 and 146 for receiving electric power from the battery 132.

For separating the second housing part 74 from the first housing part 72, the connector 190 is simply disconnected from the terminal 144 and 146.

The preload spring 174 is positioned in a spring chamber, designated the reference numeral 192, bounded by a spring attachment structure, designated the reference numeral 194, and a spring chamber wall 196. The stiffness of the preload spring 174 is selected so that the force generated by the compressed preload spring 174, as shown in fig. 10, falls short of effecting the advancement of the piston 104' by itself when the capsule 20 is mounted in the applicator tool 70'. The preload spring 174 merely provides an assisting force for advancing the piston 104', whereby the actual advancement of the piston 104', by pressing the button 108, may be performed using only a small pressing force on the button 108.

The alternative second housing part 74' differs from the second housing part 74 of figs. 5-9 by being divided into a rear section, designated the reference numeral 198, and a front section, designated the reference numeral 200. The rear section 198 is permanently attached to the support structure 78 by adhesive, whereby the catch, sidewall and recess 98, 100, and 102 are omitted. The LEDs 112 are permanently fixed to the rear section 198 by providing an optical transparent adhesive within the LED interface cavities 166, thereby reducing Fresnel loss. The front section 200 is removable for allowing the capsule 20 to be mounted and removed, and is attached to the rear section 198 by a catch, designated the reference numeral 202, provided on the front section 198, and a protrusion, designated the reference numeral 204, cooperating with the catch 202 and being provided on the rear section 198. As the front section 200 is attached to the rear section 198 optical communication is established throughout the second housing part 74' for guiding the light towards the applicator tip 40 as described previously.

The features differentiating the applicator tool 70' in fig 10 from the applicator tool 70 shown in figs 5-9, i.e. the piezoelectric element 170 with the microprocessor 176, the electrical heating element 172, the alternative second housing part 74', and the preload spring 174, may each be added, together with related supporting features as described above, independently from each other, to the applicator tool 70 to form further embodiments of the applicator tool 70.

Thus further embodiments of the applicator tool include embodiments where the applicator tool 70 has been augmented by, in one alternative, the addition of the piezoelectric, element 170 and the replacement of the LED driver circuit 134 with the microprocessor 176 (including related supporting features, i.e. the division of the piston 104' into the front segment 178 and the rear segment 180, the electrical leads 182, and the cut-out 184), or in another alternative, the addition of the electrical heating element 172 (including related supporting features, i.e. resistive heating coil 186, the electrical leads 188 and the connector 190), or in a further alternative, the addition of the preload spring 174 (including related supporting features, i.e. the spring attachment structure 194 in the spring chamber 192 having the spring chamber wall 196), or in yet a further alternative, the substitution of the second housing part 74 by the alternative second housing part 74' (comprising the rear section 198 with the protrusion 204, and the front section 200 with the catch 204), or any combination of the above-mentioned alternatives,

In a further embodiment, not shown in the figures, of the applicator tool, a stiffer preload spring as shown in fig. 10 has a stiffness sufficient to allow the preload spring, when compressed, to advance the piston shown in fig. 10 also when a capsule is mounted in the applicator tool. In this embodiment the button 108 with pawl 120 and the rack 118 is replaced by a stop/release mechanism operable by a button and comprising a brake pad biased to contact the underside of the piston 104' and connected to the button via a straight member, whereby the brake pad is separated from the piston 104' upon pressing of the button, thereby releasing the piston 104' to allow its advancement, and wherein the brake pad upon releasing of the button is biased to contact the underside of the piston, thereby arresting its advancement.

This further embodiment may be augmented by the further addition of the piezoelectric element 170 and the replacement of the LED driver circuit with the microprocessor 176 (including related supporting features, i.e. the division of the piston 104' into front section 178 and rear segment 180, the electrical leads 182, and the cut-out 184), or by the further addition of the electrical heating element 172 (including related supporting features, i.e. resistive heating coil 186, the electrical leads 188 and the connector 190). or by the substitution of the second housing part 74 by the alternative second housing part 74' (comprising the rear section 198 with the protrusion 204, and the front section 200 with the catch 204), or by any combination of these features.

In a further not shown in the figures, of the applicator tool, a further alternative second housing part, which is similar to the second housing part 74, differs from the housing part 74 by being permanently mounted on the support structure 78, the capsule 20 being mountable in an alternative coupling by being insertable through a radial aperture in the further alternative second housing pat, the aperture being provided at or near the fourth open end 94. The alternative coupling is similar to the coupling 84 and differs from the coupling 84 by the removal of a segment of the guide surface 162 and the sidewall 164 to permit the capsule to be positioned in the alternative coupling by radial movement through the aperture in the further alternative second housing part and radial movement through the opening in the sidewall and the guide surface.

This further embodiment may be augmented by the further addition of the piezoelectric element 170 and the replacement of the LED driver circuit with the microprocessor 176 (including related supporting features, i.e. the division of the piston 104' into front segment 178 and rear segment 180, the electrical leads 182, and the cut-out. 184), or by the further addition of the electhcal heating element 172 (including related supporting features, i.e. resistive heating coil 186, the electrical leads 188 and the connector 190), one of a) the addition of the preload spring 174 (including related supporting features, i.e. the spring attachment structure 194 in the spring chamber 192 having the spring chamber wall 196,') or b) the addition of the stiffer preload spring with the stop-release mechanism), or by any combination of additions.

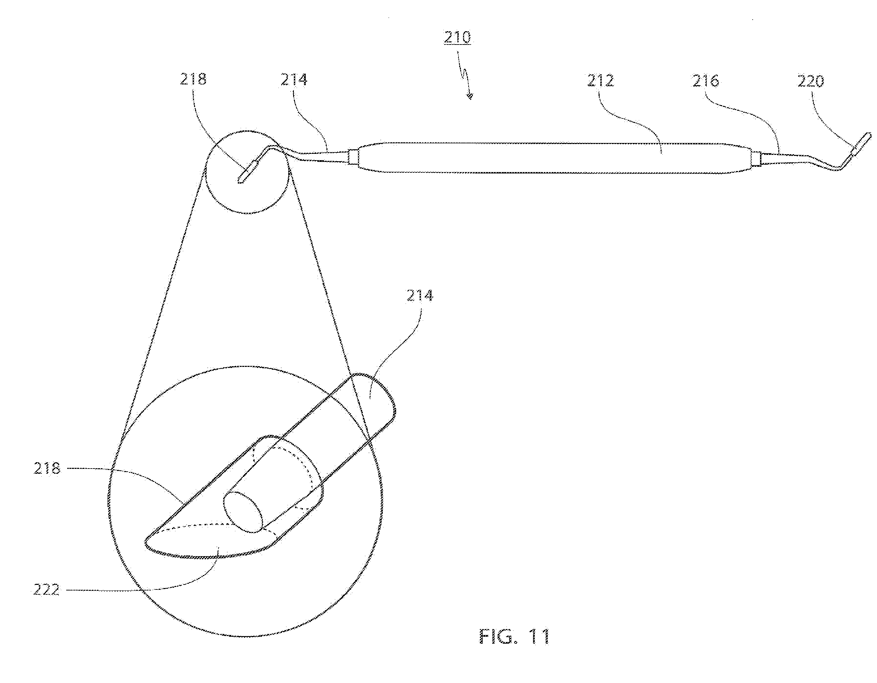

Fig. 11 shows, in side and perspective view, a first embodiment, designated the reference numeral 210, of a modelling tool according to a third aspect of the present invention. The modelling tool 210 comprises a handle, designated the reference numeral 212, and two working ends, designated the reference numerals 214 and 216 respectively. Each of the working ends 214 and 216 carries a corresponding modelling tip, designated the reference numerals 218 and 220. The modelling tips 218 and 220 are made from an optically transparent material and modelling tip 218 comprises a flat modeling surface, designated the reference numeral 222, for modelling a portion of a light curable dental filling material on a surface. A similar modeling surface is provided on the modelling tip 220, although not shown in fig. 11.

The modelling tool 210 is used for forming and compressing a portion of a light curable dental filling material on a surface and also to maintain pressure on the light curable dental filling material white curing the light curable dental filling material by irradiating the light curable dental filling material with light from a source of light (not shown) through the optically transparent material of the modelling tip 218. The injector 2 may be used for applying the portion of light curable dental filling material 34 from the capsule 20 to the dental surface. Further the modelling tool 210 may be used together with the applicator tip 40 or 40'.

The modelling tool 210 is also usable together with the applicator tool 70, 70', or the above-described further embodiments of the applicator tool, and the applicator tip 40, 40' for forming and compressing the portion of light curable dental filling material 34 where the surface to which the portion of light curable dental filling material 34 is to be applied to is too small for the applicator tip 40 or 40'. Thus the modelling tool 210 may serve as an accessory to an applicator assembly comprising the applicator tool 70, 70', or the above-described further embodiments of the applicator tool, and the applicator tip 40, 40'. In an exemplary procedure the applicator tool 70, 70', or the above-described further embodiments of the applicator tool with applicator tip 40, 40', is used for applying a portion of light curable dental filling material 34 to a dental surface, which dental surface however is too small for allowing the portion of light curable dental filling material to be efficiently formed with the applicator tip 40, 40'. The modelling tool 210 is then used to form and compress the portion of light curable dental filling material 34 on the dental surface. The portion of tight curable dental filling material may then be cured by positioning the applicator tool 70, 70', or the above described further embodiments of the applicator tool, with the applicator tip 40, 40' so that the light being emitted from the applicator tip 40, 40' passes through the modelling tip 220 of the modelling tool 210 for irradiating and curing the portion of light curable dental filling material 34 on the dental surface. If the new dental surface, formed by the cured portion of light curable dental filling material 34, is sufficiently large to allow a further portion of light curable dental filling material 34 applied to the new dental surface, to be modeled by the applicator tip 40, 40', the applicator tip 40, 40' may be used for modeling the further portion of light curable dental filling material 34 applied to the new surface. If the new surface is still too small, then the further portion of light curable dental material 34 may be modelled using the modelling tool 210.

The materials used in the handle 112, the working ends 214 and 216, and the modeling tips 218 and 220 should be hard, autoclavable,and be non-adherent to the light curable dental filling material 34. Accordingly the handle 212 is made from plastic or metal, the working ends 214 and 216 are made from plastic or metal, and the optically transparent material of the modelling tips 218 and 220 is plastic or silicone.

In an alernative embodiment of the modelling tool 210, not shown in fig. 11, the handle part 212 comprises a light source, represented by one or more of the LEDs 112, the light source being controlled by a switch and LED driver circuit similar to the switch 136 and the LED driver circuit 134, as well as a source of electrical power, represented by the battery 132. A button similar to the button 110 is further provided on an exterior surface of the handle part 212 for actuating the switch. The alternative embodiment of the modeling tool 210 further comprises a light guide (not shown) which extends from the light source through the working end 214 to the modelling tip 218 for allowing the portion of light curable dental filling material to be irradiated and cured. A further light guide (not shown) may extend from the fight source through the working end 216 to the modelling tip 220.

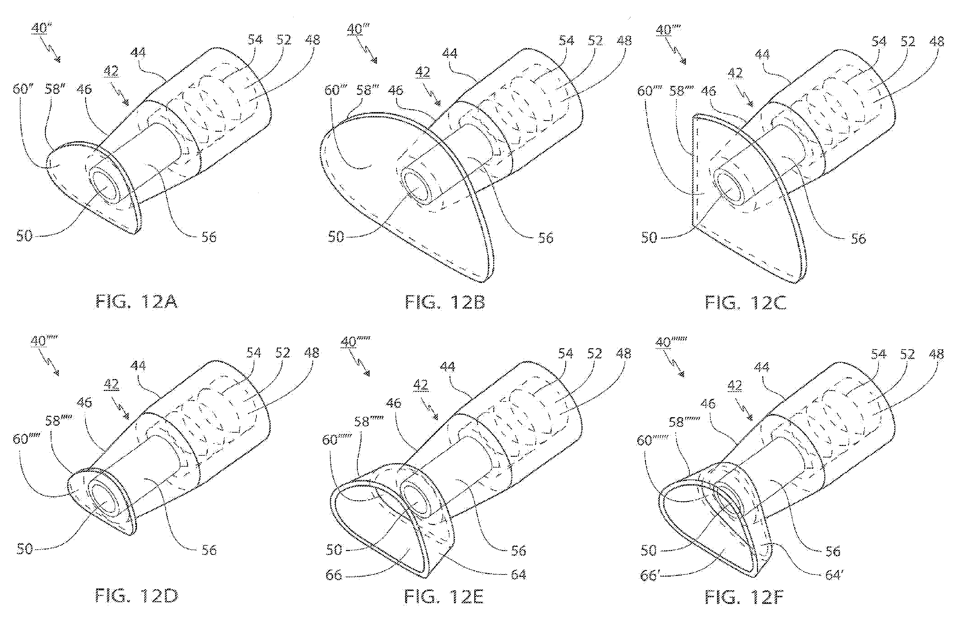

Fig. 12 shows, in perspective view, further embodiments of the applicator tip 40 according to the first aspect of the present invention. Thus fig. 12A shows a further embodiment, designated the reference numeral 40", which has a thinner modelling part, designated the reference numeral 58", and an alternative modelling surface, designated the reference numeral 60", which modelling surface 60" can flex and deform in order to conform to the dental surface, or the surfaces surrounding the dental surface.

Fig. 12B shows a further embodiment, designated the reference numeral 40''', which has a thinner and wider modelling part, designated the reference numeral 58", and an alternative modelling surface, designated the reference numeral 60"', which modelling surface 60'" can flex and deform in order to conform to a larger dental surface or the surfaces surrounding the dental surface.

Fig. 12C shows a further embodiment, designated the reference numeral 40"", which has a thinner modeling part, designated the reference numeral 58"", which has an alternative modeling surface, designated the reference numeral 60"", which modeling surface 60"" is bounded by a triangular side having two orthogonal straight sides and a rounded side. The modelling surface 60"" can flex and deform and conform to a dental surface which has a straight boundary.

Fig. 12D shows a further embodiment, designated the reference numeral 40""' which has a thin and small modelling part, designated the reference and an alternative modelling surface, designated the reference numeral 60""', which modelling surface 60"'" can flex and deform and is useful for small dental surfaces or dental surfaces which are present within a cavity.

Fig. 12E shows a further embodiment, designated the reference numeral 40""", which has an alternative modelling part, designated the reference numeral 58""", wherein an alternative modelling surface, designated the reference numeral 60""", is bounded by a modelling wall, designated the reference numeral 64, to define a modeling cavity, designated the reference numeral 66. The modeling part 58""" can further flex and deform so that the modelling wall 64 may conform to the dental surface or the surfaces surrounding the dental surface. By using the modelling tip 40""" a larger portion of light curable dental filling material 34 may be applied to the dental surface and cured.

The modelling tip 40""" may for example be used for effecting an abutment on a dental surface, the abutment subsequently serving to anchor a dental structure such as dental braces or as retention for orthodontic wires,

Fig. 12F shows a further embodiment, designated the reference numeral 40"""', which has an alternative modelling part, designated the reference numeral 58"""', wherein an alternative modelling surface, designated the reference numeral 60'""", is bounded by an alternative modeling wall, designated the reference numeral 64', to define an alternative modeling cavity, designated the reference numeral 66', having a smaller volume than the modelling cavity 66. The modeling tip 40'""" is used similarly to the modelling tip 40""".

Although not shown in the figures, numerous further alterations in size and shape, to the part 58 and the modelling surface 60 are possible.

Further, although figs. 2-4 and 12 show the hollow interior channel 48 with applicator outlet 50 being perpendicular to the modeling surface 60, (60', 60", 60"', 60"", 60"'"', 60""", and 80"'"") it is also possible to provide an application tip having an angled modelling part 58 so that the hollow interior channel 48 with applicator outlet 50 is not perpendicular to the modeling part 58 with modelling surface 60.

Still further, the alternative inner wall covering 56' with applicator outlet guard 62 is shown in fig. 4 as provided on the applicator tip 40'. However, the alternative inner wall covering 56' with applicator outlet guard covering 62 may also be applied to the applicator tips 40, 40", 40"',40"", 40""', 40""", or 40'""".

In additional embodiments of the tool 210 the modelling surface 222 may be shaped as any of the modeling surfaces 60, 60', 60", 60"', 60'''', 60''''''60'''''' (with modelling wall 64 defining modelling cavity 66), and 60""'" (with modelling wall 64' defining modelling cavity 66'), excluding the applicator outlet 50.

### List of parts with reference to the figures:

| |
|---|
| 2. injector |
| 4. Handle |
| 6. Lever |
| 8. Pivot pin |
| 10. Capsule interface |
| 20. Capsule |
| 22. Rear end |
| 24. Flange |
| 26 Front end |
| 28. Discharge pipe |
| 30. Discharge opening |
| 32. End wall |
| 34. Light curable dental filling material |
| 40. Applicator tip |
| 42. Body |
| 44 Rear body portion |
| 46 Front body portion |
| 48. Hollow interior channel |
| 50. Applicator outlet |
| 52. Inlet connector |
| 54. Thread forming screw thread |
| 56. inner wall covering |
| 58 Modelling part |
| 60 Modelling surface |
| 62. Applicator outlet guard covering |
| 64. Modelling wall |
| 66. Modelling cavity |
| 70. Applicator tool |
| 72. First housing part |
| 74 Second housing part |
| 76. Handle part |
| 78. Support structure |
| 80. First end |
| 82. Second end |
| 84. Coupling |
| 86. interior compartment |
| 88 Wall |
| 90 Bulge |
| 92 Third open end |
| 94. Fourth open end |
| 96. Bow portion |
| 98. Catch |
| 100. Sidewall |
| 102 Recess |
| 104 Piston |
| 106 Handle |
| 108. Button for advancing the piston |
| 110. Button for energizing LEDs |
| 112. LEDs |
| 114. Light receiving surface |
| 116 Second light emission surface |
| 118 Rack |
| 120. Pawl |
| 122. Resilient bead |
| 124. Cavity |
| 126.Lever |
| 128. Pivot point |
| 130. Helical spring |
| 132 Battery |
| 134. LED-driver circuit |
| 136. Electrical switch |
| 138. Electrical leads |
| 140. Electrical leads |
| 142 Electrical leads |
| 144 First electrical terminal |
| 146 Second electrical terminal |
| 148 leads |
| 150. Electrical leads |
| 152 Guide channel |
| 154. Piston head |
| 156. Coupling cavity |
| 158 Bottom wall |
| 160. Aperture |
| 162. Guide surface |
| 164 Sidewall |
| 166 LED interface cavity |
| 170. Piezoelectric element |
| 172. Electrical heating element |
| 174. Preload spring |
| 176. Microprocessor |
| 178. Front segment |
| 180. Rear segment |
| 182 Electrical leads |
| 184. Cut-out |
| 186. Resistive heating coil |
| 188. Electrical leads |
| 190. Connector |
| 192. Spring chamber |
| 194. Spring attachment structure |
| 196 Spring chamber wall |
| 198. Rear section |
| 200. Front section |
| 202. Catch |
| 204. Protrusion |
| 210. Modelling tool |
| 212. Handle part |
| 214 Working end |
| 216 Working end |
| 218. Modelling tip |
| 220. Modelling tip |
| 222 Modelling surface |

## Claims

1. An applicator tip of a dental apparatus for applying a portion of a light curable dental filing material to a dental surface comprising:
a body having an applicator outlet and a hollow interior channel communicating with said applicator outlet and defining an inlet connector opposite said applicator inlet,
said inlet connector being connectable to a source of said tight curable dental filling material via a further connector of said source of said light curable dental filling material and establishing communication from said source of said light curable dental filling material into said hollow interior channel
said applicator outlet being adapted to apply said portion of said light curable dental filling material to said dental surface,
said hollow interior channel comprising an inner wall covering extending from said inlet connector to said applicator outlet,
said body further comprising an external modelling part for modelling said portion of said light curable dental filling material,
said body being pervious to light passing through said body from a source of light for irradiating and curing said portion of said light curable dental filling and
said wall covering being impervious to said light for shielding a remainder of said light curable dental filling material present within said covering from said light to prevent the curing of said remainder of said light curable dental filling material.

2. The applicator tip according to claim 1, further comprising
a light inlet juxtaposed said inlet connector.
a light outlet juxtaposed said applicator outlet, and
said body having a refractive index adapted to guide light from said fight inlet to said light outlet substantially without emitting said light from said body between said light inlet and said light outlet.

3. The applicator tip according to any of the claims 1-2, said inlet connector including an interior thread adapted to cooperate with an exterior thread of said further connector,

4. The applicator tip according to claim 3, said interior thread being a thread forming thread and said exterior thread being formed by said interior thread during the connection of said inlet connector to said further connector.

5. The applicator tip according to any of the claims 1-4, said modelling part having a concave modeling surface for fixing and compacting said portion of said light curable dental filling material on said surface, said applicator outlet being provided on said modelling surface.

6. An applicator tool for applying a portion of a light curable dental filling material to a dental surface, modelling said portion of said light curable dental filling materiel on said dental surface, and curing said portion of said light curable dental filling material on said dental surface, comprising:
a tool part comprising a first housing part having a generally elongated and cylindrical shape, said first housing part including a handle part and a support structure to said handle part,
said first housing part including an electrical switch, operable from outside said first housing part and a light source connected to said electrical switch, said electrical switch being operable for supplying electrical power from a source of electrical power to said light source for energizing said light source for emitting light from a first light emission surface part of said first housing part,
said support structure having a first end and an opposite second end, said first end being joined to said handle part and said second end defining a coupling for receiving a rear end of a capsule containing said light curable material, said capsule comprising a displaceable end wall at said rear end and a discharge connector opposite said rear end,
said first housing part further including a piston and a drive mechanism, said piston being extendable through said coupling and having a piston head for engaging said displaceable end wall of said capsule, and said drive mechanism being actuable from outside said first housing part to advance said piston for discharging said portion of said light curable dental filling material through said discharge connector, and
a light guide part comprising a second housing part defining a hollow and generally cylindrical shape having an overall length exceeding the overall distance between said first and second end of said support structure,
said second housing part comprising a third open end and an opposite fourth open end, said second housing part covering said support structure from said third end for defining an interior compartment between said fourth open end and said coupling, said interior compartment being adapted to enclose said capsule and align said discharge connectof with said fourth open end.
said third open end comprising a light receiving surface for receiving light emitted from said first light emission surface part for guiding said right from said third open end to said fourth open end through said second housing part,
said fourth open end being adapted to interface with an applicator tip according to claim 2 or any of the claims 3-5 depending on 2 by inserting said body of said applicator tip into said fourth, open end and connecting said applicator tip to said discharge connector for applying said portion of said light curable dental filling material to said dental surface, and for modelling said portions of said light curable dental filling material on said dental surface, and,
said fourth open end further comprising a second light emission surface for transferring light from said second housing part to said light inlet of said body of said applicator tip for guiding said light through said body to said light outlet for irradiating and curing said portion of said light curable dental filling material on said dental surface.

7. The applicator tool according to claim 6.
said second housing part being slidably positionable in a position upon said support structure for covering said support structure from said third end and defining said interior compartment.
said first housing part comprising a first locking structure,
said second housing part comprising a second locking structure, and, said first locking structure being engageable and lockable with said second locking structure for retaining said second housing part in said position.

8. The applicator tool according to claim 8, said second housing part being divided into a rear section and a front section,
said rear section being permanently attached to said first housing part and covering a portion of said overall distance between said first and second end of said support structure, said light receiving surface of said rear section being permanently attached to said first light emission surface part, said rear section comprising a first locking structure,
said front section being slidably positionable in a position upon said support structure for covering a remainder of said overall distance between said first and second end of said support structure, said front section comprising a second locking structure, and
said first locking structure being engageable and lockable with said second locking structure for retaining said front section in said position.

9. The applicator tool according to any of the claims 6-8, said first housing part further comprising an electrical switch operable from outside said first housing part and an electrical vibrator connected to said electrical switch,
said electrical vibrator being operatively connected to said piston.
said electrical switch being operable for supplying electrical power from said source of electrical power to said electrical vibrator for energizing said electrical vibrator for supplying vibratory motion to said piston, and
said piston being adapted to transfer said vibratory motion to said light curable dental filling material within said capsule for lowering the viscosity of said light curable dental filling material.

10. The applicator tool according to any of the claims 6-9, said drive mechanism comprising a rack and a pawl,
said rack being mounted to said piston,
said pawl being adapted to engage said rack for advancing said piston upon actuation of said drive mechanism.

11. The applicator tool according to any of the claims 6-9, said drive mechanism comprising a spring and a release mechanism.
said spring being operatively connected between said piston and said first housing part for accumulating spring potential energy upon retraction of said piston,
said spring further being adapted to advance said piston by converting said spring potential energy to work,
said release mechanism being operatively connected between said piston and said first housing part for arresting the advancement of said piston, and
said release mechanism being adapted to release said piston upon actuation of said drive mechanism for allowing said spring to advance said piston.

12. An applicator assembly comprising the combination of:
the applicator tip according to claim 2 or any of the claims 3-5 dependent on claim 2, and,
the applicator tool according to any of the claims 6-11.

13. A modelling tool comprising:
a handle part having an elongated shape and defining a working end, said working end carrying a modeling tip for modelling a portion of a light curable dental filling material applied to a dental surface, said modeling tip being pervious to light passing through said modelling tip from a source of light for irradiating and curing said portion of said light curable dental filing material.

14. A method of: applying a portion of a light curable dental filling material to a dental surface, modeling said portion of said light curable dental filling material on said dental surface, and curing said portion of said light curable dental filling material on said dental surface, comprising the steps of:
(a) providing a body having an applicator outlet and a hollow interior channel communicating with said applicator outlet and defining an inlet connector opposite said applicator inlet,
said inlet connector being connectable to a source of said light curable dental filling material via a further connector of said source and establishing communication from said source of said light curable dental filing material into said hollow interior channel,
said applicator outlet being adapted to apply said portion of said light curable dental filling material to said dental surface,
said hollow interior channel comprising an inner wall covering extending from said inlet connector to said applicator outlet,
said body further comprising a external modelling part for modelling said portion of said light curable dental filling material,
said body being pervious to light passing through said body from a source of light for irradiating and curing said portion of said light curable dental filling material and
said inner wall covering being impervious to said light for shielding a remainder of said light curable dental filling material present within said covering from said light to prevent the curing of said remainder of said light curable dental filling material.
(b) providing said source of said light curable dental filling material,
(c) providing said source of light for irradiating and curing said light curable dental filing material,
(d) connecting said inlet connector to said source of light curable dental filling material via said further connector of said source of light curable dental filling material and establishing communication from said source of light curable dental filling material into said hollow interior channel,
(e) applying said portion of said light curable dental filling material to said surface using said applicator outlet,
(f) modelling said portion of said light curable dental filling material using said modeling part, and
(g) passing light through said body from said source of light for irradiating and curing said portion of said light curable dental filling material.

15. A method of: applying a portion of a light curable dental filling material to a dental surface, modelling said portion of said light curable dental filling material on said dental surface, and curing said portion of said light curable dental filling material on said dental surface, comprising the steps of:
(a) providing a tool part comprising a first housing part having a generally elongated and cylindrical shape, said first housing part including a handle part and a support structure joined to said handle part.
said first housing part including an electical switch operable from outside said first, housing part and a light source connected to said electrical switch, said electrical switch being operable for supplying electrical power from a source of electrical power to said light source for energizing said light source for emitting light from a first light emission surface part of said first housing part,
said support structure having a first end and an opposite second end, said first end being joined to said handle part and said second end defining a coupling for receiving a rear end of a capsule containing said light curable material, said capsule comprising a displaceable end wall at said rear end and a discharge connector opposite said rear end,
said first housing part further including a piston and a drive mechanism, said piston being extendable through said coupling and having a piston head for engaging said displaceable end wall of said capsule, and said drive mechanism being actuable from outside said first housing part to advance said piston for discharging said portion of said light curable dental filling material through said discharge connector, and
a light guide part comprising a second housing part defining a hallow and generally cylindrical shape having an overall length exceeding the overall distance between said first and second end of said support structure,
said second housing part comprising a third open end and an opposite fourth open end, said second housing part covering said support structure from said third end for defining an interior compartment between said fourth open end and said coupling, said interior compartment being adapted to enclose said capsule and align said discharge connector with said fourth open end,
said third open end comprising a light receiving surface for receiving light emitted from said first light emission surface part for guiding said light from said third open end to said fourth open end through said second housing part,
said fourth open end being adapted to interface with an applicator tip according to claim 2 or any of the claims 3-5 dependent on claims 2 by inserting said body of said applicator tip into said fourth open end and connecting said applicator tip to said discharge connector for applying said portion of said light curable dental filling material to said dental surface, and for modelling said portion of said light curable dental filling material on said dental surface, and,
said fourth open end further comprising a second light emission surface for transferring light from said second housing part to said light inlet of said body of said applicator tip for guiding said light through said body to said light outlet for irradiating and curing said portion of said light curable dental filling material on said dental surface,
(b) providing said capsule containing said light curable material,
(c) providing said applicator tip,
(d) enclosing said capsule in said interior compartment and aligning said discharge connector with said fourth open end and receiving said rear end of said capsule in said receiver,
(e) interfacing said applicator tip with said fourth open end by inserting said body of said applicator tip into said fourth open end and connecting said applicator tip to said discharge connector,
(f) actuating said drive mechanism from outside said first housing part to advance said piston for discharging said portion of said light curable dental filling material through said discharge connector,
(g) applying said portion of said light curable dental filling material to said dental surface using said applicator tip,
(h) modelling said portion of said light curable dental filling material on said dental surface using said applicator tip, and
(i) operating said electrical switch for supplying electrical power from said source of electrical power to said light source for energizing said light source for irradiating and curing said portion of said light curable dental filling material on said dental surface

16. The method according to claim 15, wherein step (h) is substituted by, preceded by, or followed by the substeps of:
(i.i) providing a modelling tool comprising a handle part having an elongated shape and defining working end, said working end carrying a modelling tip for modeling a portion of a light curable dental filling material applied to a dental surface said modelling tip being pervious to light passing through said modelling tip from a source of light for irradiating and curing said portion of said light curable dental filling material, and
(i.ii) modellin said portion of light curable dental filling material on said dental surface using said modelling tip.
